# EUROPÄISCHE PATENTSCHRIFT

(11) **EP 3 639 314 B1**
(45) Veröffentlichungstag und Bekanntmachung des Hinweises auf die Patenterteilung: **02.12.2020**
(21) Anmeldenummer: 18730716.0
(22) Anmeldetag: 07.06.2018
(51) Int. Cl.: H01M 8/06, H01M 8/04082, H01M 8/04186, C01B 3/00

(54) **VORRICHTUNG UND VERFAHREN ZUM ERZEUGEN VON ELEKTRISCHEM STROM MITTELS WASSERSTOFF UND EINEM WASSERSTOFFSPEICHERMEDIUM**
DEVICE AND METHOD FOR PRODUCING ELECTRICITY USING HYDROGEN AND A HYDROGEN STORAGE MEDIUM
DISPOSITIF ET PROCÉDÉ DE PRODUCTION DU COURANT ÉLECTRIQUE AU MOYEN D'HYDROGÈNE ET D'UN MILIEU D'ACCUMULATION D'HYDROGÈNE

(30) Priorität: 12.06.2017 DE 102017209891
(43) Veröffentlichungstag der Anmeldung: 22.04.2020
(73) Patentinhaber: HYDROGENIOUS LOHC TECHNOLOGIES GMBH, 91058 Erlangen (DE)
(72) Erfinder: TEICHMANN, Daniel, 80796 München (DE); BÖSMANN, Andreas, 91093 Hessdorf (DE); GEBURTIG, Denise, 90489 Nürnberg (DE); PREUSTER, Patrick, 91180 Heideck (DE); WASSERSCHEID, Peter, 91054 Erlangen (DE); MÜLLER, Karsten, 90408 Nürnberg (DE); MAYRHOFER, Karl, 91054 Erlangen (DE); SIEVI, Gabriel, 91054 Erlangen (DE)
(74) Vertreter: Rau, Schneck & Hübner Patentanwälte Rechtsanwälte PartGmbB
(86) Internationale Anmeldenummer: PCT/EP2018/064946
(87) Internationale Veröffentlichungsnummer: WO 2018/228895

(56) Entgegenhaltungen:
- WO-A1-2015/075045
- WO-A1-2015/110334
- US-A1- 2008 248 339
- PATRICK PREUSTER ET AL: "Liquid Organic Hydrogen Carriers (LOHCs): Toward a Hydrogen-free Hydrogen Economy", ACCOUNTS OF CHEMICAL RESEARCH., Bd. 50, Nr. 1, 17. Januar 2017 (2017-01-17), Seiten 74-85, XP55440427, US ISSN: 0001-4842, DOI: 10.1021/acs.accounts.6b00474

## Beschreibung

Die vorliegende Patentanmeldung nimmt die Priorität der deutschen Patentanmeldung DE 10 2017 209 891.0 in Anspruch.

Die Erfindung betrifft eine Vorrichtung und ein Verfahren zum Erzeugen von elektrischem Strom.

Wasserstoff als Energieträger kann mittels flüssiger organischer Kohlenwasserstoffverbindungen (LOHC) vorteilhaft gespeichert und gehandhabt werden. LOHC als Wasserstoffspeichermedium für ein mit LOHC betriebenes Kraftfahrzeug ist aus dem Stand der Technik bekannt. In einem derartigen Fahrzeug ist ein Dehydrier-Reaktor erforderlich, um das an dem LOHC gebundene Wasserstoffgas freizusetzen und einer Brennstoffzelle zum Verstromen zuzuführen. Die Freisetzung von Wasserstoff von LOHC ist endotherm. Die Dehydrierreaktion findet in einem Temperaturbereich von etwa 280 °C bis 320 °C statt. Die Abwärme, die bei der Brennstoffzelle bei einer Betriebstemperatur von höchstens 160 °C anfällt, ist für die alleinige Vorheizung des Dehydrier-Reaktors nicht ausreichend. Es ist eine zusätzliche Bereitstellung von Wärme auf Reaktionstemperatur erforderlich. Der Wirkungsgrad eines LOHC-Fahrzeugs ist reduziert. Der apparative Aufwand für die Herstellung und Bereitstellung des Wasserstoffgases für die Brennstoffzelle ist erhöht. In Qi, Z.; Kaufmann, A.: "Performance of 2-Propanol in direct-oxidation fuel cells", Journal of Power Sources, 112 (2002) 121-129, ist eine Direkt-Brennstoffzelle bekannt. Die Direkt-Brennstoffzelle ermöglicht die Verstromung des Wasserstoffes an 2-Propanol zu Aceton. 2-Propanol weist gegenüber LOHC eine reduzierte Wasserstoff-Speicherdichte auf, so dass ein Fahrzeug mit einer durch 2-Propanol angetriebenen Direkt-Brennstoffzelle gegenüber einem LOHC-Fahrzeug eine reduzierte Reichweite aufweist.

Weitere Vorrichtungen zum Speichern von Wasserstoff in chemisch gebundener Form sind bekannt aus der WO 2015/075045 A1 und aus Preuster, P. et al.: "Liquid Organic Hydrogen Carriers (LOHCs): Toward a Hydrogen-free Hydrogen Economy", Accounts of chemical research, 50 (2017) 74-85.

Weitere Vorrichtungen mit jeweils einer Direkt-Brennstoffzelle sind bekannt aus US 8,871,393 B1, US 2008/0248339 A1 und US 2014/0080026 A1.

Der vorliegenden Erfindung liegt die Aufgabe zugrunde, das Erzeugen von elektrischem Strom, insbesondere in der mobilen Anwendung, zu verbessern, insbesondere die Effizienz bei der Stromerzeugung zu erhöhen.

Die Aufgabe wird durch die Merkmale der Ansprüche 1 und 13 gelöst. Erfindungsgemäß wurde erkannt, dass Stromerzeugung besonders effizient ist, wenn Wasserstoff, der an einem Wasserstoff-Speichermedium, insbesondere LOHC, gespeichert ist, in einer Wasserstoff-Transfereinheit auf ein Wasserstoff-Transfermedium transferiert werden kann, welches wiederum vorteilhaft in einer Verstromungseinheit zum Erzeugen von elektrischem Strom aus dem Wasserstoff-Transfermedium genutzt werden kann. Das Transferieren des Wasserstoffs erfolgt insbesondere unmittelbar und insbesondere direkt von dem Wasserstoff-Speichermedium auf das Wasserstoff-Transfermedium. Insbesondere sind Zwischenschritte bei dem Wasserstofftransfer entbehrlich. Es ist insbesondere nicht erforderlich, Wasserstoff von dem Wasserstoff-Speichermedium in einem ersten, separaten Verfahrensschritt freizusetzen, um das so gewonnene Wasserstoffgas in einem zweiten, separaten Hydrierschritt an das Wasserstoff-Transfermedium zu binden.

Es ist kennzeichnend für die vorliegende Erfindung, dass es sich bei dem eingesetzten Wasserstoff-Speichermedium und bei dem eingesetzten Wasserstoff-Transfermedium um zwei unterschiedliche Materialsysteme handelt. Das Wasserstoff-Speichermedium weist dabei eine höhere Speicherdichte auf als das Wasserstoff-Transfermedium. Typischerweise weist das Wasserstoff-Speichermedium eine Speicherdichte von mindestens 30g H₂/l, insbesondere mindestens 35g H₂/l, insbesondere mindestens 40g H₂/l, insbesondere mindestens 45g H₂/l, insbesondere mindestens 50g H₂/l, insbesondere mindestens 55g H₂/l auf.

Weiterhin ist es kennzeichnend für das Wasserstoff-Speichermedium, dass es eine hervorragende Kompatibilität mit den Materialien, Aggregaten und Anlagen der heute existierenden Infrastruktur für die Bevorratung und den Transport von Kraftstoffen aufweist. Daraus ergibt sich insbesondere der technisch relevante Umstand, dass das Wasserstoff-Speichermedium problemlos in Behältern, Tankanlagen und Tankfahrzeugen gehandhabt werden kann, die ursprünglich für die Handhabung von Benzin und Diesel konstruiert wurden. Das Wasserstoff-Speichermedium kann daher ohne die Notwendigkeit einer neuen Infrastruktur benutzt werden.

Das Wasserstoff-Speichermedium zeichnet sich weiterhin dadurch aus, dass es nicht mit hinreichender Effizienz in einer Brennstoffzelle direkt verstromt werden kann. Bei Kontakt des Wasserstoff-beladenen Wasserstoff-Speichermediums mit der Edelmetall-haltigen Anode einer Brennstoffzelle, beispielsweise einer Pt/Ru-haltigen Anode, werden im Brennstoffzellenbetrieb mit Luftsauerstoff auf der Kathodenseite lediglich Leistungsdichten von weniger als 1 mW/cm² erhalten.

Im Gegensatz dazu zeichnet sich das Wasserstoff-Transfermedium dadurch aus, dass es mit ausreichender Effizienz in einer Brennstoffzelle direkt verstromt werden kann. Bei Kontakt des Wasserstoff-beladenen Wasserstoff-Transfermediums mit der Edelmetall-haltigen Anode einer Brennstoffzelle, beispielsweise einer Pt/Ru-haltigen Anode, werden im Brennstoffzellenbetrieb mit Luftsauerstoff auf der Kathodenseite Leistungsdichten von über 1 mW/cm², insbesondere von über 10 mW/cm², insbesondere von über 60 mW/cm² erhalten.

Überraschend wurde gefunden, dass es möglich ist, LOHC als Wasserstoff-Speichermedium zu nutzen, um Wasserstoff unmittelbar auf das Wasserstoff-Transfermedium zu übertragen. Es wurde erkannt, dass die Wasserstoff-Transfereinheit besonders vorteilhaft gemäß der DE 10 2014 201 332 A1 ausgeführt sein kann. Eine weitere Transfereinheit ist aus US 2004/0223907 A1 bekannt.

Insbesondere erfolgt die Erzeugung elektrischen Stroms direkt und unmittelbar in einer sogenannten Direkt-Brennstoffzelle. Die Erfindung nutzt also einerseits die hohe Speicherdichte des Wasserstoff-Speichermediums und andererseits die effiziente Verstromung des Wasserstoff-Transfermediums in der Verstromungseinheit. Darüber hinaus wurde überraschend gefunden, dass das Transferieren von Wasserstoff in der Wasserstoff-Transfereinheit im Wesentlichen thermoneutral erfolgen kann, so dass eine Wärmezufuhr im Wesentlichen und insbesondere vollständig entbehrlich ist. Zusätzliche Heizelemente können entfallen. Wärme, die in der Verstromungseinheit beim direkten Verstromen des Wasserstoff-Transfermediums erzeugt wird, kann zum Vorwärmen der Wasserstoff-Transfereinheit unmittelbar genutzt werden. Dazu dient insbesondere eine Wärmeübertragungs-Einheit. Der Transfer von Wasserstoff in der Wasserstoff-Transfereinheit erfolgt an dem Wasserstoff-Speichermedium in einem zumindest teilweise beladenen Zustand LOHC⁺ in einen teilweise entladenden Zustand des Wasserstoff-Speichermediums LOHC⁻. Entsprechend wird Wasserstoff-Transfermedium von einem zumindest teilweise unbeladenen Zustand TM⁻ in einen zumindest teilweise beladenen Zustand TM⁺ überführt.

Die erfindungsgemäße Vorrichtung ermöglicht die Transferhydrierung annähernd thermoneutral und insbesondere eine direkte Wasserstoffübertragung von LOHC⁺ auf TM⁻ zu LOHC⁻ und TM⁺. Die Transferierung erfolgt weitgehend und insbesondere vollständig ohne Wasserstoff-Freisetzung. Das Wasserstoff-Transfermedium ist regenerierbar und dient vorteilhaft zum Betreiben der Polymer-Elektrolyt-Membran-Brennstoffzelle. Eine Totaloxidation ist vermieden. Die Brennstoffzelle kann ohne elementaren Wasserstoff im System betrieben werden. CO₂-Emissionen unter Verwendung eines energiedichten Speichermediums sind im Gegensatz zu anderen Direkt-Brennstoffzellen, wie der Direkt-Methanol-Brennstoffzelle vermieden. Die Vorrichtung weist eine hohe Sicherheit auf. Die Dehydrierwärme wird in der Verstromungseinheit, insbesondere in der Brennstoffzelle, direkt aufgebracht. Die Dehydrierwärme muss nicht durch Verbrennung oder eine externe Wärmequelle bereitgestellt werden. Die Temperaturen im Gesamtsystem liegen vorteilhaft unterhalb von 250 °C. Eine Bereitstellung von Wärme ist im Wesentlichen nicht erforderlich. Ein möglicher Aufwand für eine zusätzliche Beheizung ist reduziert.

Gegenüber einer Direkt-Methanol-Brennstoffzelle weist die erfindungsgemäße Vorrichtung einen höheren Wirkungsgrad auf und vermeidet Kohlendioxid-Emissionen. Gegenüber dem 2-Propanol aus der bekannten Direkt-2-Propanol-Brennstoffzelle ermöglicht LOHC eine erhöhte Energiespeicherdichte. Insbesondere beträgt die Energiespeicherdichte von Perhydro-Dibenzyltoluol 56 g H₂/l. Die Energiespeicherdichte von 2-Propanol beträgt dagegen nur 26 g H₂/l.

Potenzielle Anwendungsgebiete der Vorrichtung sind die geräuscharme Stromerzeugung in kleinen, autarken Anlagen, die Stromversorgung auf mobilen Plattformen, die Stromerzeugung im Betrieb von Fahrzeugen aller Art, insbesondere zum On-board-Laden einer Batterie, die entsprechende Elektromotoren antreibt. Die Erfindung ermöglicht eine effiziente Wasserstoffmobilität ohne elementaren Wasserstoff an Bord eines Fahrzeugs, das dennoch im Gegensatz zur Direkt-Methanol-Brennstoffzelle weitgehend ohne CO2-Emissionen betrieben werden kann.

Eine Vorrichtung gemäß Anspruch 2 ermöglicht eine vorteilhafte Speicherung des Wasserstoff-Speichermediums. Die Wasserstoff-Speichermedium-Speichereinheit kann mehrere Wasserstoff-Speichermedium-Speicherbehälter aufweisen, die beispielsweise separat voneinander ausgeführt sind. Insbesondere kann eine Wasserstoff-Speichermedium-Speichereinheit einen einzigen Wasserstoff-Speichermedium-Speicherbehälter aufweisen, in dem das Wasserstoff-Speichermedium verschiedener Zustände gespeichert wird. Es ist auch denkbar, mindestens zwei voneinander getrennte Kammern in dem Wasserstoff-Speichermedium-Speicherbehälter vorzusehen, wobei eine erste Kammer zur Speicherung des Wasserstoff-Speichermediums im zumindest teilweise beladenem Zustand und eine zweite Kammer zum Speichern des Wasserstoff-Speichermediums in zumindest teilweise unbeladenem Zustand vorgesehen sind.

Eine Vorrichtung gemäß Anspruch 3 ermöglicht die vorteilhafte Speicherung des Wasserstoff-Transfermediums, wobei zwei voneinander getrennte Wasserstoff-Transfermedium-Speicherbehälter vorgesehen sein können. Dadurch, dass das Wasserstoff-Transfermedium zyklisch und insbesondere im Wesentlichen beliebig oft mit Wasserstoff wieder beladbar ist, ist der Speicherbedarf für das Wasserstoff-Transfermedium reduziert. Das Wasserstoff-Transfermedium bildet ein Arbeitsfluid wie beispielsweise Motoröl in einem Verbrennungsmotor.

Die Ausführung der Verstromungseinheit gemäß Anspruch 4 ermöglicht eine unmittelbare und vorteilhafte Nutzung des Wasserstoff-Transfermediums als Energieträger. Eine Freisetzung von elementarem Wasserstoff ist entbehrlich. Die Brennstoffzelle ist wahlweise eine Hochtemperaturbrennstoffzelle oder eine Niedertemperaturbrennstoffzelle.

Eine Vorrichtung mit einer Brennstoffzelle gemäß Anspruch 5 ermöglicht eine erhöhte Energieausbeute der Vorrichtung. Der Wirkungsgrad der Vorrichtung ist verbessert.

Eine Vorrichtung gemäß Anspruch 6 ermöglicht eine konstante Stromabnahme von der Verstromungseinheit. Eine Zwischenspeicherung elektrischer Energie ist mittels einer Batterie entbehrlich.

Eine Vorrichtung gemäß Anspruch 7 eignet sich insbesondere für den mobilen Einsatz in einem elektromotorisch angetriebenen Kraftfahrzeug. Die Vorrichtung ermöglicht in einem elektrisch betriebenen Kraftfahrzeug eine rechnerische Reichweite von bis zu 900 km. Insbesondere ist die Reichweite gegenüber einem sonst identischen Kraftfahrzeug mit reinem LOHC-Antrieb oder reinem 2-Propanol/Aceton-Antrieb erhöht.

Trenneinheiten gemäß den Ansprüchen 8 bis 10 garantieren zuverlässig eine weitgehende Trennung der Stoffströme innerhalb der Vorrichtung. Dadurch, dass das Wasserstoff-Speichermedium und das Wasserstoff-Transfermedium in der Wasserstoff-Transfereinheit unmittelbar in Kontakt kommen, ist eine Trennung von Wasserstoff-Speichermedium und Wasserstoff-Transfermedium vorteilhaft. Eine Trennung der Medien des beladenen Zustands vom unbeladenem Zustand erhöht die Effizienz, also den Wirkungsgrad, bei der Erzeugung elektrischen Stroms.

Eine Regelungseinheit gemäß Anspruch 11 ermöglicht insbesondere eine flexible Betriebsweise der Vorrichtung, insbesondere die gezielte Realisierung unterschiedlicher Betriebszustände. Die Regelungseinheit steht insbesondere mit der Wasserstoff-Transfereinheit, der Verstromungseinheit, der elektrischen Batterie, dem Elektromotor, den Trenneinheiten und/oder den Speichereinheiten in bidirektionaler Signalverbindung.

Eine mobile Einrichtung gemäß Anspruch 12 ist insbesondere ein elektromotorisch angetriebenes Fahrzeug, insbesondere ein Kraftfahrzeug in Form eines Automobils, eines Schienenfahrzeugs oder eines Wasserfahrzeugs.

Das Erzeugen von elektrischem Strom gemäß dem unabhängigen Anspruch 13 weist im Wesentlichen die Vorteile der Vorrichtung auf, worauf hiermit verwiesen wird.

Die Verwendung des Wasserstoff-Speichermediums gemäß Anspruch 14 ermöglicht die vorteilhafte Handhabung, insbesondere bezüglich des Betankens des Kraftfahrzeugs und/oder des Transferierens des Wasserstoffs auf das Wasserstoff-Transfermedium.

Das Wasserstoff-Speichermedium ist eine Flüssigkeit. Es ist vorgesehen, eine flüssige, wasserstoffreiche Wasserstoffspeicherverbindung oder Gemische flüssiger, wasserstoffreicher Wasserstoffspeicherverbindungen in einem Vorratsbehälter oder Tank bereitzustellen, die für die Verwendung in der erfinderischen Anordnung und insbesondere zur Übertragung von Wasserstoff auf das Wasserstofftransfersystem genutzt wird. Bei dieser Übertragung wandelt sich die flüssige, wasserstoffreiche Wasserstoffverbindung oder die entsprechenden Gemische solcher Verbindungen in eine wasserstoffarme Form. Die flüssige, wasserstoffreiche Wasserstoffspeicherverbindung stellt Wasserstoff in gebundener Form, insbesondere in chemisch gebundener Form bereit. Die Handhabung von molekularem, gasförmigen Wasserstoff, dessen Lagerung und Handhabung kompliziert und sicherheitstechnisch riskant ist und daher einen hohen apparativen und damit verbundenen Kostenaufwand erfordert, um sicherheitstechnische Risiken zu minimieren, kann dadurch umgangen werden.

Die verwendete flüssige, wasserstoffreiche Wasserstoffspeicherverbindung ist insbesondere die wasserstoffreiche Verbindung eines LOHC-Systems wie es dem Stand der Technik aus Accounts of Chemical Research, 2017, 50(1), 74-85 bekannt ist. Die Wasserstoffbereitstellung in Form einer wasserstoffreichen LOHC-Verbindung hat den besonderen Vorteil, dass LOHC-Wasserstoffspeicherverbindungen unter den verwendeten Lager- und Prozessbedingungen als organische Verbindung in flüssiger Form vorliegen. Insbesondere ermöglichen die LOHC-Wasserstoffspeicherverbindungen, dass sie reversibel mit Wasserstoff beladen und von Wasserstoff entladen werden können. Die physikochemischen Eigenschaften der LOHC-Wasserstoffspeicherverbindungen haben hohe Ähnlichkeit zu herkömmlichen flüssigen Kraftstoffen, sodass Tanks, Pumpen und Tankfahrzeuge zum Transport und als Behälter zur Lagerung aus dem Bereich der Kraftstoff- und Brennstofflogistik genutzt werden können. Die Wasserstoffspeicherung in chemisch gebundener Form in einer organischen Flüssigkeit erlaubt eine drucklose Lagerung bei Normalbedingungen über große Zeiträume ohne signifikanten Wasserstoffverlust.

Als flüssige, wasserstoffreiche LOHC-Wasserstoffspeicherverbindungen sind insbesondere gesättigte, zyklische Kohlenwasserstoffe mit einem oder mehreren Sechsringen geeignet, die bei Wasserstoffabgabe in aromatische Verbindungen mit einem π-Elektronensystem oder mehreren π-Elektronensystemen überführt werden können. Aus diesen wasserstoffarmen Verbindungen kann durch katalytisches Hydrieren die wasserstoffreiche Form wieder gewonnen werden. Als flüssige, wasserstoffreiche LOHC-Wasserstoffspeicherverbindungen können insbesondere Perhydro-Dibenzyltoluole und Perhydro-Benzyltoluole als Reinstoffe, isomere Gemische oder Mischungen dieser Substanzen miteinander verwendet werden. Es ist auch möglich, als flüssige, wasserstoffreiche LOHC-Wasserstoffspeicherverbindungen heteroatomhaltige, zyklische Verbindungen zu nutzen, die bei Wasserstoffabgabe in wasserstoffarme, heteroaromatische Verbindungen mit einem π-Elektronensystem oder mehreren π-Elektronensystemen überführt werden. Insbesondere sind Perhydro-N-Ethylcarbazol, Perhydro-N-Propylcarbazol, Perhydro-N-Isopropylcarbazol, Perhydro-N-Butylcarbazol, Perhydro-N-Ethylindol oder Mischungen dieser Substanzen miteinander geeignet.

Die flüssige, wasserstoffreiche Wasserstoffspeicherverbindung und insbesondere eine mit Wasserstoff beladene LOHC-Wasserstoffspeicherverbindung sowie Gemische solcher Verbindungen stellen eine geeignete Transportform und Speicherform für den chemisch gebundenen Wasserstoff dar, da die physikalisch-chemischen Eigenschaften der Wasserstoff-beladenen LOHC-Wasserstoffspeicherverbindung denen von Diesel und anderen Kraftstoffen stark ähneln.

Die Verwendung eines Wasserstoff-Transfermediums gemäß Anspruch 15 ermöglicht die vorteilhafte Direkt-Verstromung in einer Direkt-Brennstoffzelle. Das in der erfindungsgemäßen Anordnung genutzte Wasserstoff-Transfermedium besteht aus zwei Verbindungen, einer wasserstoffreichen Form des Wasserstoff-Transfermediums und einer wasserstoffarmen Form des Wasserstoff-Transfermediums. Gibt die wasserstoffreiche Form des Wasserstoff-Transfermediums Wasserstoff ab, so bildet sich die wasserstoffarme Form des Wasserstoff-Transfermediums.

In der erfindungsgemäßen Anordnung gibt die wasserstoffreiche Form des Wasserstoff-Transfermediums Wasserstoff überwiegend in einer Brennstoffzelle ab, in der der zunächst gebundene Wasserstoff zunächst zu Protonen und schließlich mit dem zugeführten Sauerstoff zu Wasser umgewandelt wird und dabei elektrischer Strom produziert wird.

In der erfindungsgemäßen Anordnung nimmt die wasserstoffarme Form des Wasserstoff-Transfermediums Wasserstoff überwiegend in der Einheit zur Wasserstoffübertragung auf, wo der Wasserstoff von der flüssigen wasserstoffreichen Wasserstoffspeicherverbindung überwiegend direkt auf die wasserstoffarme Form des Wasserstoff-Transfermediums übertragen wird und auf diese Weise die wasserstoffreiche Form des Wasserstoff-Transfermediums gebildet wird.

Geeignete Wasserstoff-Transfermedien weisen in ihrer wasserstoffarmen Form wenigstens eine Kohlenstoff-Sauerstoff-Doppelbindung vom Typ 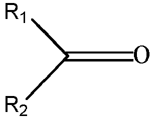 auf, wobei R₁ und R₂ je ein Alkylrest, Cycloalkylrest oder Arylrest mit 1-8 Kohlenstoff-Atomen oder ein Rest sein kann, der neben den Kohlenstoffatomen eine oder mehrere zusätzliche Kohlenstoff-Sauerstoff-Doppelbindungen oder Kohlenstoff-Sauerstoff-Einfachbindungen aufweist. Ferner können ein oder mehrere Wasserstoffatome des Rests R durch Fluoratome ersetzt sein. Die Reste R₁ und R₂ können auch andere Atome außer Kohlenstoff, Wasserstoff und Sauerstoff enthalten. Allerdings sind diese so zu wählen, dass sie nicht die Wirkung der verwendeten Katalysatoren in der Brennstoffzelle oder in der Wasserstoffübertragung zwischen der flüssigen, wasserstoffreichen Wasserstoffspeicherverbindung und dem Transfermedium hemmen. Die Reste R₁ und R₂ können gleich oder unterschiedlich sein. Sie können auch miteinander zu einem Ring verbunden sein, wobei in diesem Fall ein oder mehrere Ringglieder durch Sauerstoff-Atome ersetzt sein können.

Die wasserstoffarme Form geeigneter Wasserstoff-Transfermedien wird durch WasserstoffAufnahme ganz überwiegend in eine Verbindung überführt, die die entsprechende Kohlenstoff-Sauerstoff-Einfachverbindung vom Typ 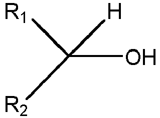 aufweist. Durch die Wasserstoffaufnahme ändern sich die Reste R₁ und R₂ nicht, es sei denn die Reste enthalten mehrere Kohlenstoff-Sauerstoff-Doppelbindungen, die ebenfalls Wasserstoff aufnehmen können und in eine Kohlenstoff-Sauerstoff-Einfachbindung überführt werden.

Geeignet sind solche Wasserstoff-Transfermedien, die in ihrer wasserstoffreichen Form direkt in einer Brennstoffzelle mit Sauerstoff zu Wasser, elektrischem Strom und der wasserstoffarmen Form umgesetzt werden können, ohne dass dabei das Wasserstoff-Transfermedium in erheblichem Maß, also in einem kleineren Anteil als 30 %, zu Kohlendioxid oder anderen Zersetzungsprodukten umgesetzt und auf diese Weise unbrauchbar wird.

Geeignet sind ferner Wasserstoff-Transfermedien, deren wasserstoffarme und deren wasserstoffreiche Form bis mindestens 100 °C thermisch stabil sind, was in einer thermischen Zersetzung der Verbindungen bei 100 °C von weniger als 10 % pro Stunde zum Ausdruck kommt.

Geeignet sind ferner solche Wasserstoff-Transfermedien, die sich dadurch auszeichnen, dass die wasserstoffreiche und die wasserstoffarme Form des Wasserstoff-Transfermediums deutlich voneinander unterschiedliche Siedepunkte aufweisen. Siedepunktunterschiede von mindestens 20 °C kennzeichnen solche geeignete Wasserstoff-Transfermedien.

Geeignet sind ferner Wasserstoff-Transfermedien, die sich dadurch auszeichnen, dass die Siedepunkte ihrer wasserstoffreichen und ihrer wasserstoffarmen Form bei Umgebungsdruck zwischen 40 °C und 340 °C liegen.

Geeignet sind ferner Wasserstoff-Transfermedien, die sich dadurch auszeichnen, dass die Schmelzpunkte ihrer wasserstoffreichen und ihrer wasserstoffarmen Form bei Umgebungsdruck zwischen -100 °C und 120 °C liegen. Liegt der Schmelzpunkt über Raumtemperatur kennzeichnet zusätzlich eine gute Wasserlöslichkeit der wasserstoffreichen und der wasserstoffarmen Form solche besonders geeigneten Wasserstoff-Transfermedien. Ganz allgemein ist eine gewisse Mischbarkeit der wasserstoffreichen und der wasserstoffarmen Form des Wasserstoff-Transfermediums mit Wasser von Vorteil. Geeignete Wasserstoff-Transfermedien können mit 0,01 bis 50 Gewichtsprozent Wasser versetzt werden ohne eine flüssig-flüssig Mischungslücke mit Wasser auszubilden, um die Viskosität herabzusenken, die Brennstoffzelle zu befeuchten oder eine besonders einfache Abtrennung des Wasserstoff-Transfermediums von der wasserstoffreichen oder wasserstoffarmen Wasserstoffspeicherverbindung bzw. von Gemischen solcher Wasserstoffspeicherverbindungen zu realisieren.

Geeignet sind ferner Wasserstoff-Transfermedien, die sich durch eine Wasserstoffkapazität von mindestens 1 % auszeichnen, deren Molekülmasse also beim Beladen der wasserstoffarmen Form mit Wasserstoff bis zur maximalen Beladungsgrenze mindestens um 1 % zunimmt.

Geeignet sind ferner Wasserstoff-Transfermedien, die sich dadurch auszeichnen, dass weder ihre wasserstoffreiche noch ihre wasserstoffarme Form die Wirkung der eingesetzten Katalysatoren in der Brennstoffzelle und in der Einheit zur Wasserstoffübertragung hemmen.

Geeignet sind ferner solche Wasserstoff-Transfermedien, die sich dadurch auszeichnen, dass ihre wasserstoffarme Form rasch und ohne Nebenproduktbildung in der Einheit zur Wasserstoffübertragung Wasserstoff von der flüssigen, wasserstoffreichen Wasserstoffspeicherverbindung bzw. entsprechenden Wasserstoffspeicherverbindungsgemischen aufnehmen kann und diesen Wasserstoff in einer Brennstoffzelle rasch und ohne erhebliche Nebenproduktbildung in Form von Protonen und Elektronen wieder abgeben kann, um mit dem zugegebenen Sauerstoff elektrischen Strom und Wasser zu produzieren.

Für einige Ausführungsformen der erfindungsgemäßen Anordnung ist es günstig, wenn die wasserstoffreiche Form, die wasserstoffarme Form oder beide Formen des Wasserstoff-Transfermediums eine flüssig-flüssig Mischungslücke mit den unterschiedlichen, wasserstoffreichen oder wasserstoffarmen Formen der flüssigen Wasserstoffspeicherverbindung oder entsprechender Gemische aufweisen.

Für einige Ausführungsformen der erfindungsgemäßen Anordnung ist es außerdem günstig, wenn die wasserstoffarme Form des Wasserstoff-Transfermediums mehr als eine Kohlenstoff-Sauerstoff Doppelbindung aufweisen, da auf diese Weise die Wasserstofftransferkapazität des Wasserstoff-Transfermediums gesteigert wird.

Als geeignete Wasserstoff-Transfermedien werden insbesondere Verbindungen beansprucht, die in ihrer wasserstoffreichen Form 1-10 sekundäre Alkoholgruppen enthalten, die bei Wasserstoffabgabe in der Brennstoffzelle zu den entsprechenden Verbindungen mit 1-10 Ketogruppen umgesetzt werden können.

Besonders bevorzugt sind die folgenden Wasserstoff-Transfermedien, wobei in der folgenden Aufzählung stets die wasserstoffreiche Form TM⁺ zuerst und die wasserstoffarme Form TM⁻ danach genannt werden:
2-Propanol / Aceton
2-Butanol / 2-Butanon
2-Pentanol / 2-Pentanon
3-Pentanol / 3-Pentanon
2-Hexanol / 2-Hexanon
3-Hexanol / 3-Hexanon
2,3-Butandiol / 2,3-Butandion
2,3-Pentandiol / 2,3-Pentandion
2,4-Pentandiol / 2,4-Pentandion
2,3,4-Pentantriol / 2,3,4-Pentantrion
2,3-Hexandiol / 2,3-Hexandion
2,4-Hexandiol / 2,4-Hexandion
2,5-Hexandiol / 2,5-Hexandion
Cyclopentanol / Cyclopentanon
Cyclohexanol / Cyclohexanon

Auch Mischungen dieser Substanzen sind möglich, sowie Mischungen mit inerten, weiteren Flüssigkeiten, insbesondere Wasser.

Zusätzlich oder alternativ kann das Wasserstoff-Transfermedium auch dadurch gebildet sein, dass Wasserstoff an einer oder an mehreren C-H-Bindungen jeweils durch ein Fluoratom ersetzt ist.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine stark schematische Ansicht einer mobilen Einrichtung in Form eines elektrisch angetriebenen Fahrzeugs gemäß der Erfindung,
- Fig. 2: eine schematische Detaildarstellung einer erfindungsgemäßen Vorrichtung zum Erzeugen von elektrischen Stroms gemäß einem ersten Ausführungsbeispiel,
- Fig. 3: eine vergrößerte Schnittdarstellung einer Wasserstoff-Transfereinheit der Vorrichtung in Fig. 2,
- Fig. 4: eine vergrößerte Detaildarstellung einer Wasserstoff-Speichermedium/Wasserstoff-Transfermedium-Trenneinheit gemäß Fig. 2,
- Fig. 5: eine schematische Schnittdarstellung einer Brennstoffzelle der Vorrichtung gemäß Fig. 2,
- Fig. 6: eine Fig. 2 entsprechende Darstellung einer Vorrichtung gemäß einem zweiten Ausführungsbeispiel,
- Fig. 7: eine Fig. 2 entsprechende Darstellung einer Vorrichtung gemäß einem dritten Ausführungsbeispiel.

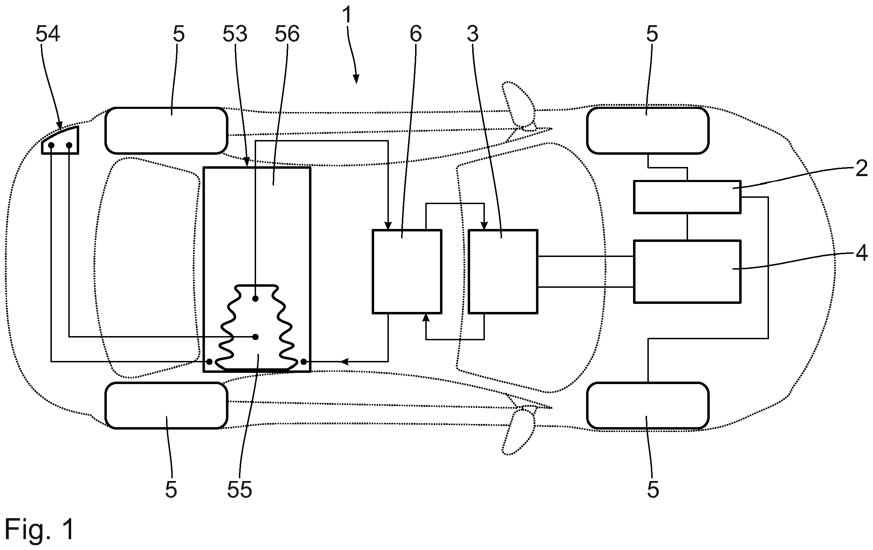

Nachfolgend wird anhand von Fig. 1 bis 5 eine mobile Einrichtung mit einer Vorrichtung zum Erzeugen von elektrischem Strom näher erläutert. Die mobile Einrichtung ist gemäß dem gezeigten Ausführungsbeispiel ein Automobil 1. Das Automobil 1 weist einen Elektromotor 2 als Fahrantrieb auf. Der Elektromotor 2 ist insbesondere ein Gleichstrom-Elektromotor. Das Automobil 1 ist elektromotorisch angetrieben. Das Automobil 1 ist ein Elektroauto.

Der elektrische Strom der zum Betreiben des Elektromotors 2 erforderlich ist, wird mittels einer Verstromungseinheit 3 in Form einer Direkt-Brennstoffzelle on-board erzeugt. Die Direkt-Brennstoffzelle ist an dem Automobil 1 vorhanden. Die Direkt-Brennstoffzelle ist in dem Automobil 1 integriert. Die Verstromungseinheit 3 ist mit einer elektrischen Batterie 4 verbunden, die zur Zwischenspeicherung des in der Verstromungseinheit 4 erzeugten elektrischen Stroms dient und in der elektrischer Strom gepuffert wird. Der elektrische Strom wird unmittelbar in dem Elektromotor 2 zum Antrieb der Räder 5 des Automobils 1 verbraucht. Dazu steht der Elektromotor 2 mit den Rädern 5 des Automobils 1 in kraftübertragender Weise in Verbindung.

Die Verstromungseinheit 3 wird mittels eines Wasserstoff-Transfermediums betrieben. In der Verstromungseinheit 3 wird aus dem Wasserstoff-Transfermedium direkt und unmittelbar elektrischer Strom erzeugt. Der Verstromungseinheit 3 wird eine wasserstoffreiche Form des Wasserstoff-Transfermediums TM⁺, also Wasserstoff-Transfermedium in einem mindestens teilweise beladenen Zustand, zugeführt und Wasserstoff-Transfermedium in wasserstoffarmer Form TM⁻, also in einem zumindest teilweise entladenen beziehungsweise geringer beladenem Zustand, abgeführt. TM⁻ kann in einer Wasserstoff-Transfereinheit 6 zumindest teilweise mit Wasserstoff wieder beladen und anschließend in der Verstromungseinheit 3 verstromt werden. Das Beladen des Wasserstoff-Transfermediums in der Wasserstoff-Transfereinheit 6 erfolgt dadurch, dass Wasserstoff von einem Wasserstoff-Speichermedium auf das Wasserstoff-Transfermedium transferiert wird. Das Transferieren des Wasserstoffs in der Wasserstoff-Transfereinheit 6 erfolgt insbesondere unmittelbar und direkt. Ein separates Freisetzen von Wasserstoff, das Handhaben von Wasserstoffgas und das Verbinden des Wasserstoffgases mit dem Wasserstoff-Transfermedium in separaten Reaktoren ist entbehrlich.

Die Wasserstoff-Transfereinheit 6 ist insbesondere mit einer Wasserstoff-Speichermedium-Speichereinheit 53 verbunden. In der Wasserstoff-Speichermedium-Speichereinheit 53 wird das Wasserstoff-Speichermedium gelagert.

Die Wasserstoff-Speichermedium-Speichereinheit 53 besitzt bevorzugt zwei Kammern, die getrennt befüllt und entleert werden können. Die Lagerung des Wasserstoff-Speichermediums in einem zumindest teilweise beladenen Zustand LOHC⁺ geschieht bevorzugt in einer ersten Speicherkammer 55 der Wasserstoff-Speichermedium-Speichereinheit 53, die über eine Tankkupplung 54 mit LOHC⁺ von außen befüllt werden kann. Die Lagerung des Wasserstoff-Speichermediums in einem zumindest teilweise entladenen Zustand LOHC⁻ geschieht bevorzugt in einer zweiten Speicherkammer 56 der Wasserstoff-Speichermedium-Speichereinheit 53, aus der über die Tankkupplung 54 das LOHC⁻ nach außen abgesaugt werden kann. Die erste Speicherkammer 55 und die zweite Speicherkammer 56 sind insbesondere voneinander getrennt, insbesondere durch eine flexible Membran.

Durch das Transferieren von Wasserstoff auf das Wasserstoff-Transfermedium in der Wasserstoff-Transfereinheit 6 wird das Wasserstoff-Speichermedium entladen, also von einem zumindest teilweise beladenen Zustand LOHC⁺ in einen zumindest teilweise unbeladenen Zustand LOHC⁻ überführt. LOHC⁻ kann der Wasserstoff-Speichermedium-Speichereinheit 53 entnommen und LOHC⁺, insbesondere im Rahmen eines Tankvorgangs, wieder zugeführt werden.

Die in Fig. 1 gezeigte Anordnung kann nicht nur zur elektrischen Versorgung eines Automobils dienen, sondern auch zur Versorgung eines Fahrrads, eines Motorrads, eines Lastkraftwagens, eines Bau- oder Minenfahrzeugs, eines Flurförderfahrzeugs, eines forstwirtschaftlichen Spezialfahrzeugs, eines Omnibusses, eines Schienenfahrzeugs, eines Schiffes, eines Luftschiffs oder eines Flugzeugs dienen. Die Anordnung kann dazu dienen, den gesamten Energiebedarf des Fahrzeugs zu decken oder auch nur eine Teilmenge des Energiebedarfs zu decken.

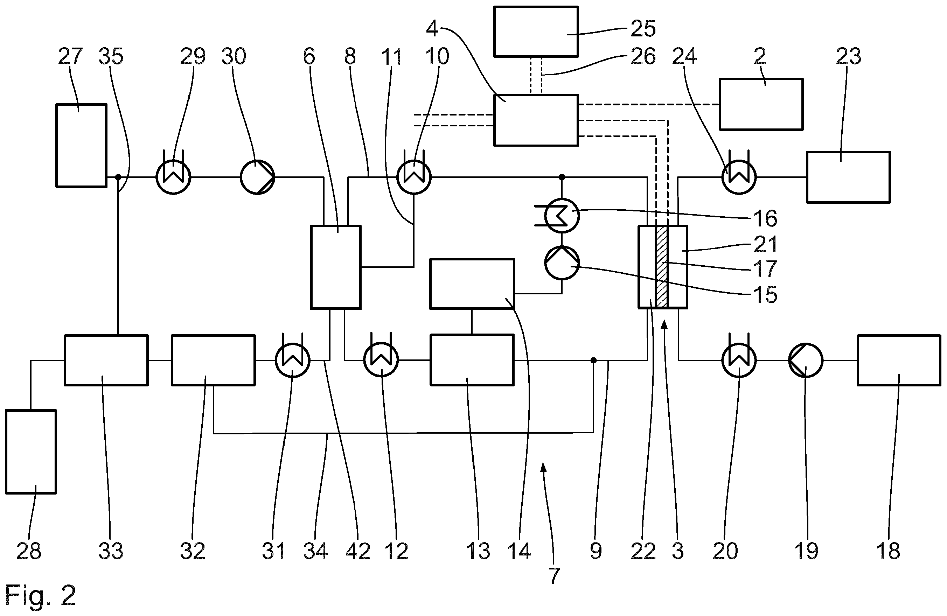

Nachfolgend wird anhand der Fig. 2 eine Vorrichtung zum Erzeugen von elektrischem Strom näher erläutert. Die insgesamt mit 7 bezeichnete Vorrichtung weist die Wasserstoff-Transfereinheit 6 und die Verstromungseinheit 3 auf. Die Verstromungseinheit 3 ist als Direkt-Brennstoffzelle ausgeführt. Die Wasserstoff-Transfereinheit 6 und die Verstromungseinheit 3 sind über eine erste Kreislaufleitung 8 miteinander verbunden, um mit Wasserstoff in der Wasserstoff-Transfereinheit 6 angereichertes TM⁺ in die Verstromungseinheit 3 zu fordern.

Die Wasserstoff-Transfereinheit 6 und die Verstromungseinheit 3 sind mittels einer zweiten Kreislaufleitung 9 miteinander verbunden, um zumindest teilweise in der Verstromungseinheit 3 zu elektrischem Strom verstromtes Wasserstoff-Transfermedium in die Wasserstoff-Transfereinheit 6 zu fördern. Die Verstromungseinheit 3, die Wasserstoff-Transfereinheit 6 und die Kreislaufleitungen 8, 9 bilden ein geschlossenes Kreislaufsystem.

Entlang der ersten Kreislaufleitung 8 ist ein erster Kreislauf-Wärmetauscher 10 angeordnet. An dem ersten Kreislauf-Wärmetauscher 10 kann gasförmiges LOHC⁺ und/oder LOHC⁻ kondensieren und durch eine erste Kreislauf-Rückführleitung 11 in die Wasserstoff-Transfereinheit 6 rückgeführt werden. Der erste Kreislauf-Wärmetauscher 10 dient zum Kühlen des angereicherten Wasserstoff-Transfermediums von einem Temperaturbereich zwischen 120 °C und 180 °C auf etwa 80 °C.

Entlang der zweiten Kreislaufleitung 9 ist ein zweiter Kreislauf-Wärmetauscher 12 angeordnet. Der zweite Kreislauf-Wärmetauscher 12 dient zum Vorwärmen und/oder Verdampfen von TM⁻, bevor dieses in die Wasserstoff-Transfereinheit 6 zugeführt wird. Es findet eine Erwärmung von 50 °C auf etwa 180 °C statt. Stromaufwärts zu dem zweiten Kreislauf-Wärmetauscher 12 ist eine Wasserstoff-Transfermedium-Trenneinheit 13 angeordnet, die zum Trennen von TM⁺ und TM⁻ dient. Als Wasserstoff-Transfermedium dient gemäß dem gezeigten Ausführungsbeispiel 2-Propanol als TM⁺ und Aceton als TM⁻. Die Wasserstoff-Transfermedium-Trenneinheit 13 kann aktiv gekühlt werden, um aus einem Abgasgemisch aus der Verstromungseinheit 3 noch Wasserstoff-angereichertes Wasserstoff-Transfermedium TM⁺ auszukondensieren und der Wasserstoff-Transfermedium-Speichereinheit 14 zuzuführen. Die typische Temperatur der Kondensation liegt bei Normaldruck in einem Temperaturbereich zwischen 5 °C und 50 °C unter dem Siedepunkt des Wasserstoff-angereicherten Wasserstoff-Transfermediums TM⁺, insbesondere in einem Temperaturbereich zwischen 10 °C und 30 °C unterhalb des Siedepunkts.

Mit der Wasserstoff-Transfermedium-Trenneinheit 13 ist eine Wasserstoff-Transfermedium-Speichereinheit 14 unmittelbar verbunden, um das Wasserstoff-Transfermedium zu speichern. Die Wasserstoff-Transfermedium-Speichereinheit 14 ist über eine Wasserstoff-Transfermedium-Pumpe 15 und einen Wasserstoff-Transfermedium-Wärmetauscher 16 mit der Verstromungseinheit 3 verbunden. Gemäß dem gezeigten Ausführungsbeispiel ist der Wasserstoff-Transfermedium-Wärmetauscher 16 an die erste Kreislaufleitung 8 angeschlossen. Der Wasserstoff-Transfermedium-Wärmetauscher 16 kann auch mittels einer separaten Förderleitung an die Verstromungseinheit 3 angeschlossen sein. Der Wasserstoff-Transfermedium-Wärmetauscher 16 dient zum Heizen des angereicherten Wasserstoff-Transfermediums aus der Wasserstoff-Transfermedium-Speichereinheit 14. Der Wärmetauscher 16 dient als Vorwärmer und insbesondere als Verdampfer für das angereicherte Wasserstoff-Transfermedium. Der Wärmetauscher 16 kann mit einer elektrischen Zusatzheizung ausgeführt sein, um eine Erwärmung des Wasserstoff-Transfermediums von 30 °C auf 80 °C zu ermöglichen.

Die Verstromungseinheit 3 weist eine protonenleitende Membran 17 auf, deren Funktion nachfolgend noch näher erläutert wird.

Die Verstromungseinheit 3 wird insbesondere aktiv gekühlt, um eine Betriebstemperatur von etwa 70 °C bis 100 °C zu gewährleisten. Die Betriebstemperatur der Verstromungseinheit 3 liegt insbesondere in einem Temperaturbereich zwischen 80 °C und 90 °C.

Ein Sauerstoffvorrat 18 ist über eine Sauerstoff-Pumpe 19 und einen Sauerstoff-Wärmetauscher 20 mit einer Kathodenseite 21 der Verstromungseinheit 3 verbunden. Der Sauerstoffvorrat 18 ist gemäß dem gezeigten Ausführungsbeispiel Umgebungsluft. Zusätzlich oder alternativ kann ein Speicherbehälter mit einer sauerstoffhaltigen Gasmischung als Sauerstoffvorrat 18 vorgesehen sein. Der Sauerstoff-Wärmetauscher 20 ermöglicht ein Vorwärmen der Luft für die Verstromungseinheit 3. Die Kreislaufleitungen 8, 9 sind jeweils mit einer Anodenseite 22 der Verstromungseinheit 3 verbunden. Die Membran 17 ist zwischen der Kathodenseite 21 und der Anodenseite 22 der Verstromungseinheit 3 angeordnet.

An der Kathodenseite 21 ist ein Wasser-Speicherbehälter 23 angeschlossen. Anstelle des Wasser-Speicherbehälters 23 kann Wasser aus der Verstromungseinheit 3 auch in ein dafür vorgesehenes Leitungssystem oder Leitungsnetz eingeleitet werden. Der Wasser-Speicherbehälter 23 kann auch entfallen, so dass das Abwasser aus der Verstromungseinheit 3 unmittelbar in ein Abwasserkanalsystem geleitet werden kann. Zwischen der Verstromungseinheit 3 und dem Wasser-Speicherbehälter 23 ist ein Wasser-Wärmetauscher 24 vorgesehen, um Wasserdampf aus der Verstromungseinheit 3 zu kondensieren. Der Wasser-Wärmetauscher 24 dient zum Kühlen des Abwassers aus der Verstromungseinheit 3 von etwa 80 °C auf etwa 40 °C. Die Verstromungseinheit 3 ist über elektrische Leitungen mit der elektrischen Batterie 4 verbunden. Die elektrische Batterie 4 ist mit dem Elektromotor 2 über eine elektrische Leitung verbunden.

Die elektrische Batterie 4 ist insbesondere mit den zum Beheizen dienenden Wärmetauschern 29, 16, 20 und/oder 12 unmittelbar verbunden.

Die Vorrichtung 7 weist eine Regelungseinheit 25 auf. Die Regelungseinheit 25 ist insbesondere mit der Batterie 4, allen Pumpen 15, 19 und 30, allen Heizungen 12, 16, 20 und 29 und/oder allen Stellventilen der Vorrichtung 7 in bidirektionaler Signalverbindung. Die Regelungseinheit 25 ermöglicht einen geregelten, insbesondere vollautomatischen, Betrieb der Vorrichtung 7. Aus Darstellungsgründen sind nicht alle Signalverbindungsleitungen in Fig. 2 dargestellt. Exemplarisch ist die Signalverbindung 26 zwischen der Regelungseinheit 25 und der elektrischen Batterie 4 gekennzeichnet. Die Signalverbindungen 26 von der Regelungseinheit 25 zu den Komponenten der Vorrichtung 7 können kabelgebunden oder kabellos ausgeführt sein.

Die Wasserstoff-Speichermedium-Speichereinheit 53 der Vorrichtung 7 umfasst einen ersten Wasserstoff-Speichermedium-Speicherbehälter 27 und einen zweiten Wasserstoff-Speichermedium-Speicherbehälter 28. Die Wasserstoff-Speichermedium-Speicherbehälter 27, 28 sind im Wesentlichen baugleich und weisen ungefähr gleiches Volumen auf. Aus Platzgründen, insbesondere an Bord eines Fahrzeugs, insbesondere an Bord eines Automobils, ist es denkbar, die beiden Speicherbehälter 27, 28 in einem einzigen Speicherbehälter zu integrieren, beispielsweise mittels einer beweglichen Membran zwischen zwei Speicherbehälterkammern. Das Volumen eines derartigen Speicherbehälters beträgt für ein Automobil beispielsweise 801. Für einen Lastwagen oder einen Zug kann das Volumen des derartigen Speicherbehälters Volumina von mehreren hundert Litern bis mehreren tausend oder mehreren zehntausend Litern aufweisen. In stationären Anlagen können die Wasserstoff-Speichermedium-Speicherbehälter 27 und 28 Volumina von mehreren tausend Litern, mehreren zehntausend oder mehreren hunderttausend Litern aufweisen. Auch noch größere Speichervolumina sind technisch realisierbar und können für die Langzeitspeicherung von Energie eingesetzt werden.

In dem ersten Wasserstoff-Speichermedium-Speicherbehälter 27 ist LOHC⁺, insbesondere Perhydro-Benzyltoluol, kurz H18-DBT, bevorratet. Der erste Wasserstoff-Speichermedium-Speicherbehälter 27 ist über einen ersten Wasserstoff-Speichermedium-Wärmetauscher 29 und eine Wasserstoff-Speichermedium-Pumpe 30 mit der Wasserstoff-Transfereinheit 6 verbunden. Der erste Wasserstoff-Speichermedium-Wärmetauscher 29 dient zum Erwärmen des Wasserstoff-Speichermediums, insbesondere in der zumindest teilweise beladenen Form von Raumtemperatur, also von etwa 20 °C, auf ein Temperaturniveau zwischen 120 °C und 180 °C.

In dem zweiten Wasserstoff-Speichermedium-Speicherbehälter 28 ist LOHC⁻, insbesondere Dibenzyltoluol, kurz H0-DBT, bevorratet. Entlang einer Förderleitung zwischen der Wasserstoff-Transfereinheit 6 und dem zweiten Wasserstoff-Speichermedium-Speicherbehälter 28 ist ein zweiter Wasserstoff-Speichermedium-Wärmetauscher 31, eine Wasserstoff-Speichermedium/Wasserstoff-Transfermedium-Trenneinheit 32 und optional eine Wasserstoff-Speichermedium-Trenneinheit 33 angeordnet. Der zweite Wasserstoff-Speichermedium-Wärmetauscher 31 dient zum Kühlen des LOHC⁻ von etwa 180 °C auf 30 °C. Die Wasserstoff-Speichermedium-Trenneinheit 33 ist stromabwärts zu der Wasserstoff-Speichermedium/Wasserstoff-Transfermedium-Trenneinheit 32 angeordnet. Die Wasserstoff-Speichermedium/Wasserstoff-Transfermedium-Trenneinheit 32 ist über eine Wasserstoff-Transfermedium-Rückführleitung 34 an die zweite Kreislaufleitung 9 angeschlossen.

Die optionale Wasserstoff-Speichermedium-Trenneinheit 33 ist über eine Wasserstoff-Speichermedium-Rückführleitung 35 an die Zuführleitung für LOHC⁺ angeschlossen, insbesondere zwischen dem ersten Wasserstoff-Speichermedium-Speicherbehälter 27 und dem Wasserstoff-Speichermedium-Wärmetauscher 29.

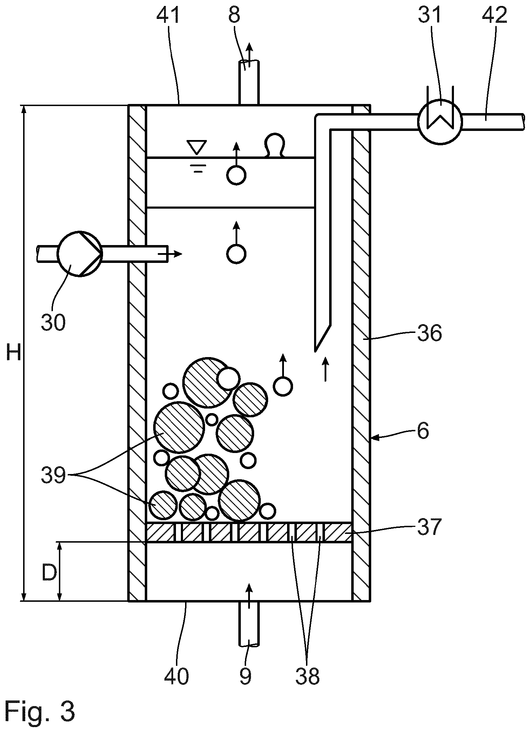

Nachfolgend wird anhand von Fig. 3 der Aufbau der Wasserstoff-Transfereinheit 6 näher erläutert. Die Wasserstoff-Transfereinheit 6 weist einen Reaktorbehälter 36 auf, der im Wesentlichen hohlzylindrisch ausgeführt. Der Reaktorbehälter 36 ist mit Wasserstoff-Speichermedium in flüssiger Form gefüllt. Der Reaktorbehälter 36 ist hochkant aufgestellt, so dass die Reaktorlängsachse im Wesentlichen vertikal orientiert ist.

In einem unteren Bereich des Reaktorbehälters 36 ist eine Lochplatte 37 angeordnet. Die Lochplatte 37 weist eine Vielzahl von Durchgangsbohrungen 38 auf. Auf der Lochplatte 37 ist Katalysatormaterial 39 angeordnet. Der Abstand D der Lochplatte 37 von der unteren Stirnseite des Reaktorbehälters 36 beträgt höchstens die Hälfte der Höhe H des Reaktorbehälters 36. Insbesondere gilt: D ≤ 0,4 · H, insbesondere D ≤ 0,3 · H, insbesondere D ≤ 0,2 · H, insbesondere D ≤ 0,15 · H, insbesondere D ≤ 0,1 · H.

An der Unterseite 40 des Reaktorbehälters 36 ist die zweite Kreislaufleitung 9 angeschlossen, um TM⁻, insbesondere Aceton, dem Reaktorbehälter 36, bevorzugt gasförmig zuzuführen. TM⁻ kann in den Reaktorbehälter 36 und durch die Durchgangsbohrungen 38 der Lochplatte 37 strömen und das Katalysatormaterial 39 sowie das Wasserstoff-Speichermedium LOHC⁺ kontaktieren. Dadurch wird Wasserstoff von dem Wasserstoff-Speichermedium LOHC⁺ unmittelbar auf das Wasserstoff-Transfermedium transferiert. TM⁺ verlässt den Reaktorbehälter 36 an der an der Oberseite 41 angeschlossenen ersten Kreislaufleitung 8. LOHC⁻ wird über eine Abführleitung 42 aus dem Reaktorbehälter 36 abgeführt und dem zweiten Wasserstoff-Speichermedium-Wärmetauscher 31 und den Trenneinheiten 32, 33 zugeführt.

Die Kontaktierung des Wasserstoff-Speichermediums mit dem Wasserstoff-Transfermedium in der Wasserstoff-Transfereinheit 6 erfolgt bevorzugt im Gegenstrom. Daher wird das mit Wasserstoff angereicherte Wasserstoff-Speichermedium LOHC⁺ der Wasserstoff-Transfereinheit 6 bevorzugt über die Wasserstoff-Speichermedium-Pumpe 30 am im oberen Drittel des mit Flüssigkeit befüllten Teils des Reaktorbehälters 36 zugeführt, während die Entnahme des wasserstoffabgereicherten Wasserstoff-Speichermediums LOHC⁻ bevorzugt über die Abführleitung 42 aus dem unteren Drittel des mit Flüssigkeit befüllten Teils des Reaktorbehälters 36 erfolgt.

Der Wasserstofftransfer von dem Wasserstoff-Speichermedium auf das Wasserstoff-Transfermedium ist dadurch verbessert. Der Wirkungsgrad der Vorrichtung 7 ist erhöht.

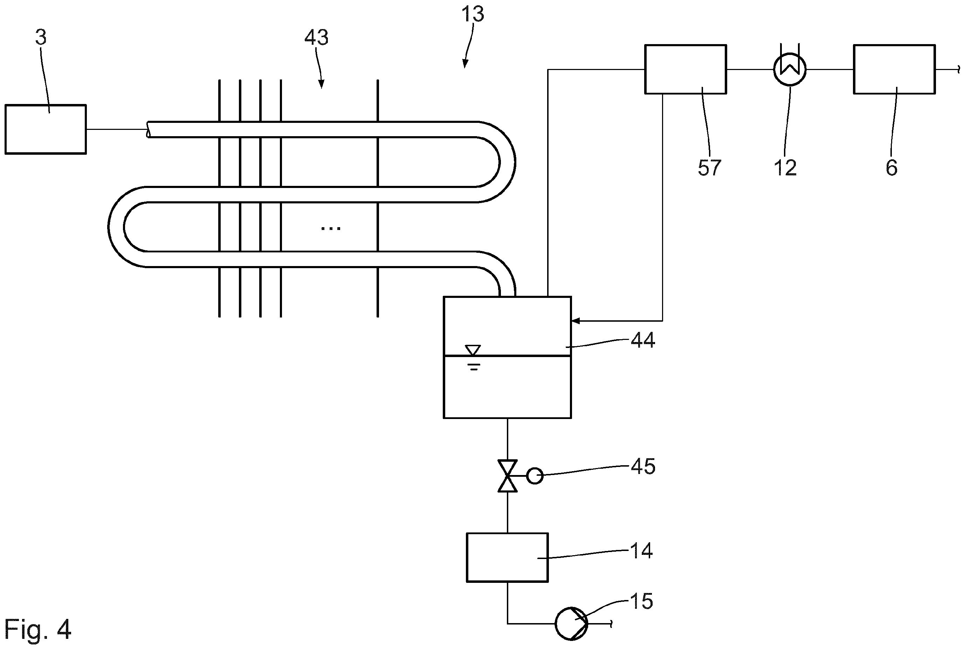

Nachfolgend wird anhand von Fig. 4 der Aufbau und die Funktion der Wasserstoff-Transfermedium-Trenneinheit 13 näher erläutert. Die Wasserstoff-Transfermedium-Trenneinheit 13 dient zum Trennen von TM⁺ und TM⁻. Die Wasserstoff-Transfermedium-Trenneinheit 13 dient zur Kondensation von Aceton, also TM⁻, und damit zur Trennung von nicht umgesetztem 2-Propanol, also TM⁺, aus der Verstromungseinheit 3. Unverbrauchtes 2-Propanol soll unmittelbar in die Wasserstoff-Transfermedium-Speichereinheit 14 geführt werden. TM⁻ wird zur Wasserstoffanreicherung in die Wasserstoff-Transfereinheit 6 gefördert.

Aceton besitzt einen Siedepunkt von 56 °C. 2-Propanol besitzt einen Siedepunkt von 82 °C. Allgemein besitzen Wasserstoff-angereicherte Wasserstoff-Transfermedien TM⁺ einen höheren Siedepunkt als ihr jeweiliger wasserstoffabgereicherter Gegenpart TM⁻. Die Kondensation des 2-Propanols erfolgt über einen luftgekühlten Kondensator 43, der mäanderförmige Leitungsabschnitte aufweist und in einen Kondensat-Behälter 44 führt. In dem Kondensat-Behälter 44 wird die kondensierte, überwiegend 2-Propanol enthaltende Flüssigkeit gesammelt und mittels eines Kondensatableiters 45 in die Wasserstoff-Transfermedium-Speichereinheit 14 überführt. Das überwiegend Aceton enthaltende Gas wird in einen weiteren Kondensator 57 eingeleitet, der zusätzlich die Funktion eines Tropfenabscheiders ausübt. Dort kondensierte Flüssigkeit, die überwiegend aus 2-Propanol besteht, wird in den Kondensat-Behälter 44 zurückgeführt. Das Gas, welches den zusätzlichen Kondensator 57 und Tropfenabscheider verlässt, besteht überwiegend aus Aceton und wird dem Wärmetauscher 12 zugeführt, um für eine erneute Wiederbeladung mit Wasserstoff in der Wasserstoff-Transfereinheit 6 erwärmt und verdampft zu werden. Durch mehrmaliges Verdampfen und Kondensieren des Gemisches aus TM⁺ und TM⁻ kann die Trennwirkung der Wasserstoff-Transfermedium-Trenneinheit 13 verbessert werden.

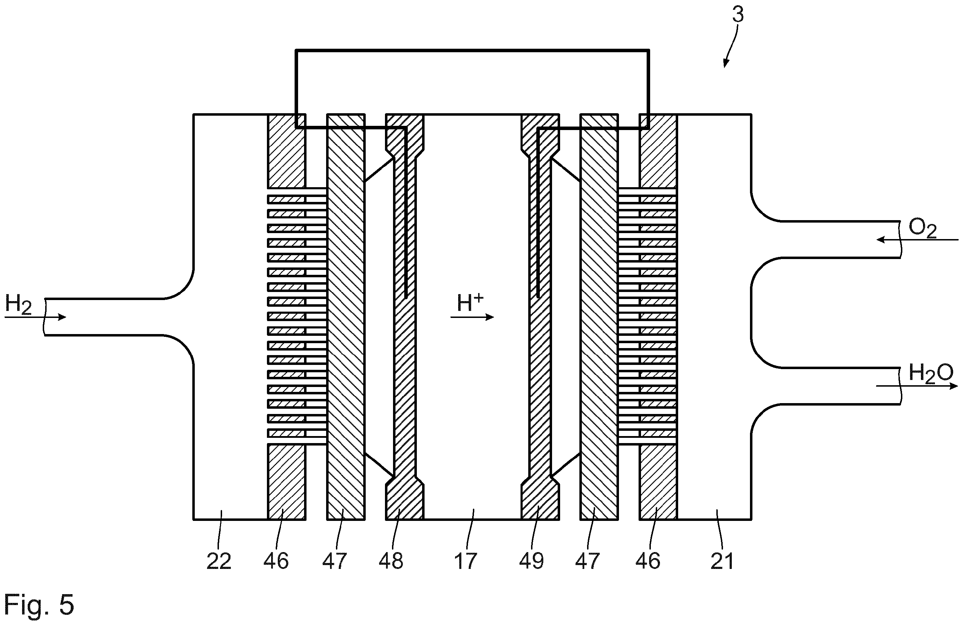

Nachfolgend wird anhand der Fig. 5 der Aufbau und die Funktion der Verstromungseinheit 3 näher erläutert. Gemäß dem gezeigten Ausführungsbeispiel ist die Brennstoffzelle eine Niedertemperatur-Polymer-Elektrolyt-Membran(PEM)-Brennstoffzelle, die bei Temperaturen zwischen 80 °C und 90 °C betrieben wird. Eine derartige Brennstoffzelle ist aus Qi, Z; Kaufmann, A.: "Performance of 2-Propanol in direct-oxidation fuel cells", Journal of Power Sources 112 (2002) 121-129 bekannt, worauf hinsichtlich Aufbau und Funktion der Direkt-Brennstoffzelle ausdrücklich verwiesen wird.

Die Brennstoffzelle ist auf der Anodenseite 22 mit TM⁺ versorgt. Über eine Bipolarplatte 46 kann TM⁺ zu einer Gasdiffusionslage 47 strömen und wird an der Anode 48 bereitgestellt. Unmittelbar mit der Anode 48 ist die protonenleitende Membran 17, die zum Beispiel aus einem Material besteht, das unter dem als Marke geschützten Handelsnamen Nafion bekannt ist, verbunden. An der der Anode 48 gegenüberliegenden Seite der Membran 17 ist zudem die Kathode 49 vorgesehen, die zusammen mit einer weiteren Gasdiffusionslage 47 und einer weiteren Bipolarplatte an der Kathodenseite 21 die Verstromungseinheit 3 vervollständigt. An der Kathodenseite 21 wird Luft oder sauerstoffhaltiges Gasgemisch zugeführt und Wasser abgeführt.

Nachfolgend wird die Funktionsweise der Vorrichtung 7 näher erläutert. TM⁺ ist in der Wasserstoff-Transfermedium-Speichereinheit 14 bevorratet und wird mittels der Wasserstoff-Transfermedium-Pumpe 15 und durch den Wasserstoff-Transfermedium-Wärmetauscher 16 gefördert und erwärmt. Die Erwärmung ist erforderlich, um das 2-Propanol von etwa 20 °C auf eine erforderliche Brennstoffzellentemperatur von etwa 80 °C zu erwärmen.

Durch das Erwärmen verdampft zumindest anteilig TM⁺ und wird der Verstromungseinheit 3 gasförmig zugeführt. Alternativ kann TM⁺ der Verstromungseinheit auch flüssig zugeführt werden. In diesem Fall wird die Gasdiffusionslage 47 der Verstromungseinheit 3 geeignet modifiziert, durch eine Flüssigkeitsverteilungslage ersetzt oder weggelassen. Zusätzlich wird der Verstromungseinheit 3 sauerstoffhaltiges Gasgemisch aus dem Sauerstoffvorrat 18 über die Sauerstoff-Pumpe 19 und den Sauerstoff-Wärmetauscher 20 zugeführt. Das sauerstoffhaltige Gasgemisch kann zusätzlich befeuchtet werden Auch das zugeführte TM⁺ kann zusätzlich befeuchtet werden.

Durch die Befeuchtung des Gasgemisches wird die Protonenleitfähigkeit der Membran, insbesondere der Nafion-Membran, erhöht. Die Membran ist insbesondere nur im befeuchteten Zustand ein Protonenleiter. Wenn die Verstromungseinheit 3 unter austrocknenden Bedingungen betrieben wird, beispielsweise mit trockenem 2-Propanol, trockener Luft und bei erhöhter Temperatur, kann das in der Verstromungseinheit 3 generierte Wasser zur Aufrechterhaltung der Membranfeuchte nicht ausreichend sein. Für Niedertemperatur-Brennstoffzellen ist bei einer Betriebstemperatur von 80 °C bis 90 °C eine Mindest-Feuchte der Membran erforderlich, damit diese eine ausreichende Protonenleitfähigkeit aufweist.

Der Gasstrom verlässt die Verstromungseinheit 3 durch den Wasser-Wärmetauscher 24, an dem Wasser kondensiert und Wärme bei etwa 60 °C gewonnen wird. Das kondensierte Wasser wird in dem Wasser-Speicherbehälter 23 gelagert. In der Verstromungseinheit 3 wird an Elektrokatalysatoren, die sich auf der Membran 17 befinden, TM⁺ in TM⁻ umgesetzt:

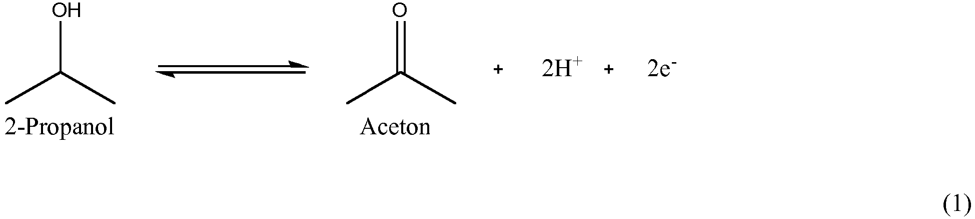

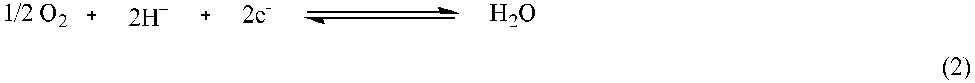

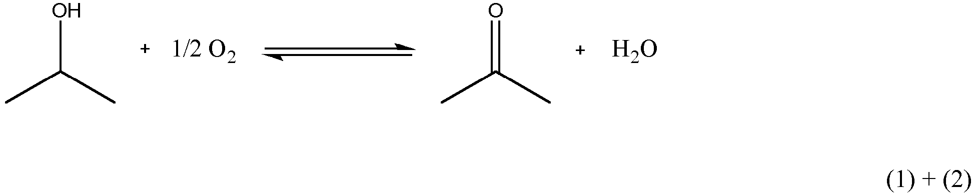

Bevorzugte Elektrokatalysatoren, die sich auf beiden Seiten der Membran 17 befinden, enthalten Metalle oder Metallgemische der Periodensystem-Gruppen 3 bis 12, vor allem Metalle und Metallgemische der Gruppen 8 bis 10 der 5. Periode und der 6. Periode, also zum Beispiel Ruthenium, Rhodium, Palladium, Iridium und Platin, insbesondere Platin und Ruthenium.

Der Fluidstrom von TM⁻ wird über die zweite Kreislaufleitung 9 der Wasserstoff-Transfermedium-Trenneinheit 13 zugeführt, um TM⁺ von TM⁻ zumindest teilweise abzutrennen. TM⁺ wird der Wasserstoff-Transfermedium-Speichereinheit 14 zugeführt.

TM⁻ wird über den zweiten Kreislauf-Wärmetauscher 12 auf eine für die Wasserstoff-Transfereinheit 6 erforderliche erste Reaktionstemperatur T1 von etwa 180 °C erwärmt.

Zudem wird LOHC⁺ aus dem ersten Wasserstoff-Speichermedium-Speicherbehälter 27 durch die Wasserstoff-Speichermedium-Pumpe 30 gefördert und mittels des Wasserstoff-Speichermedium-Wärmetauschers 29 auf die erste Reaktionstemperatur T1 von der Tanktemperatur von etwa 20 °C in dem ersten Wasserstoff-Speichermedium-Speicherbehälter 27 erwärmt. Die Tanktemperatur beträgt insbesondere zwischen 0 °C und 80 °C. Dadurch wird TM⁻ in der Wasserstoff-Transfereinheit 6 zumindest teilweise beladen und verlässt die Wasserstoff-Transfereinheit 6 über die erste Kreislaufleitung 8 und den ersten Kreislauf-Wärmetauscher 10. TM⁺ kann unmittelbar der Verstromungseinheit 3 und/oder der Wasserstoff-Transfermedium-Speichereinheit 14 zugeführt werden. An dem ersten Kreislauf-Wärmetauscher 10 kondensiert unbeabsichtigt aus der Wasserstoff-Transfereinheit 6 abgeführtes Wasserstoff-Speichermedium, das über die erste Kreislauf-Rückführleitung 11 in die Wasserstoff-Transfereinheit 6 rückgeführt werden kann.

LOHC⁻ wird aus der Wasserstoff-Transfereinheit 6 über den zweiten Wasserstoff-Speichermedium-Wärmetauscher 31 auf eine Temperatur T3 abgekühlt und der Wasserstoff-Speichermedium/Wasserstoff-Transfermedium-Trenneinheit 32 zugeführt, die in dem Wasserstoff-Speichermedium mitgeführtes Wasserstoff-Transfermedium abtrennt und über die Wasserstoff-Transfermedium-Rückführleitung 34 rückführt. In der optionalen Wasserstoff-Speichermedium-Trenneinheit 33 wird aus dem Wasserstoff-Speichermedium das noch angereicherte, zumindest teilweise beladene Wasserstoff-Speichermedium LOHC⁺ abgetrennt und dem ersten Wasserstoff-Speichermedium-Speicherbehälter 27 zugeführt. LOHC⁻ wird dem zweiten Wasserstoff-Speichermedium-Speicherbehälter 28 zugeführt. Die Wasserstoff-Speichermedium-Trenneinheit 33 ist optional.

Es ist für eine vorteilhafte Wasserstoff-Speichermedium-Speichereinheit kennzeichnend, dass LOHC⁺ und LOHC⁻ in getrennten Kammern oder Tanks gespeichert werden und sich nicht vermischen. Beide Kammern oder Tanks können jedoch in einem Tanksystem 53 verbaut sein und das gleiche Speichervolumen nutzen, beispielsweise durch Verwendung einer beweglichen Membran zwischen zwei Speicherbehälterkammern.

Um aus dem vorstehend beschriebenen Standardbetrieb zu einem Betriebspunktwechsel der Lastanhebung zu kommen, also um einen vergleichsweise höheren Strombedarf zu decken, werden zunächst die Förderraten der Pumpen 15 und 19 erhöht, um die Zufuhr TM⁺ und des sauerstoffhaltigen Gasgemisches in die Verstromungseinheit 3 zu erhöhen. Dies erfolgt insbesondere lastgeführt durch elektrische Energie aus der Batterie 4. Die höheren Volumenströme in der Verstromungseinheit 3 bewirken die Bereitstellung von mehr elektrischer Leistung. Damit steigt auch die Menge an abzuführender Wärme aus der Verstromungseinheit 3 an, insbesondere an dem Wasser-Wärmetauscher 24 und in der Wasserstoff-Transfermedium-Trenneinheit 13. Gegebenenfalls kann auch die Verstromungseinheit 3 selbst aktiv gekühlt werden, beispielsweise durch ein Gebläse.

Um den erhöhten Verbrauch von TM⁺ und den gesteigerten Volumenstrom auszugleichen, wird an dem zweiten Kreislauf-Wärmetauscher 12 und dem Wasserstoff-Speichermedium-Wärmetauscher 29 die Vorheiztemperatur für die Wasserstoff-Transfereinheit 6 erhöht. Mit dem erhöhten Volumenstrom von LOHC⁻ wird auch der Volumenstrom des beladenen Wasserstoff-Speichermediums an der Wasserstoff-Speichermedium-Pumpe 30 erhöht, so dass jederzeit ein für die Wasserstoffübertragung geeignetes Reaktionsgemisch in der Wasserstoff-Transfereinheit 6 zur Verfügung steht.

Bei einer Lastabsenkung ist es erforderlich, zu einem Lastzustand mit einer reduzierten Strombereitstellung zu gelangen. Entsprechend werden die Förderraten der Pumpen 15 und 19 lastgeführt reduziert, so dass aus der Speichereinheit 14 ein reduzierter Volumenstrom in die Brennstoffzelle 3 gelangt. Durch die reduziert en Volumenströme von Wasserstoff-Transfermedium und sauerstoffhaltigem Gas wird weniger elektrische Leistung in der Brennstoffzelle 3 zur Verfügung gestellt. Überschüsse an elektrischer Leistung, die durch die Brennstoffzelle 3 zur Verfügung gestellt werden, können solange vorteilhaft in der Batterie 4 zwischengespeichert werden, bis diese vollständig gefüllt ist.

In Abhängigkeit des Füllstands der Wasserstoff-Transfermedium-Speichereinheit 14 wird die Leistung der Wasserstoff-Transfereinheit 6 gedrosselt, bis die Wasserstoff-Transfermedium-Speichereinheit 14 nahezu vollständig gefüllt ist. Vorzugsweise wird die Leistung der Wasserstoff-Transfereinheit 6 solange auf hohem Produktionsniveau gehalten, bis die Speichereinheit 14 nahezu vollständig gefüllt ist. Die Produktivität der Wasserstoff-Transfereinheit 6 wird dadurch reduziert, dass die Volumenströme von TM⁻ aus der Wasserstoff-Transfermedium-Trenneinheit 13 und LOHC⁺ aus dem ersten Wasserstoff-Speichermedium-Speicherbehälter 27 reduziert werden. Zusätzlich kann die Temperatur der Wasserstoff-Transfereinheit 6 vermindert werden, da bei einer reduzierten Reaktionstemperatur die Produktivität in der Wasserstoff-Transfereinheit 6 sinkt.

Um die Vorrichtung 7 aus dem regulären Betrieb in einen Ruhezustand, einen sogenannten Stand-by-Modus, herunterzufahren, wird die Vorrichtung 7 zunächst im Standardbetrieb solange betrieben, bis die elektrische Batterie 4 vollständig geladen ist. Dann wird die Verstromungseinheit 3 abgeschaltet, indem die Zufuhr von beladenem Wasserstoff-Transfermedium gestoppt wird. Sauerstoffhaltiges Gasgemisch kann über die Sauerstoff-Pumpe 19 noch aufrechterhalten werden, insbesondere wenn dies zum Abfahren der Verstromungseinheit 3 erforderlich ist. Anschließend kann die Zufuhr von sauerstoffhaltigem Gasgemisch unterbrochen werden.

TM⁺ wird dann aus der Wasserstoff-Transfereinheit 6 unmittelbar der Wasserstoff-Transfermedium-Speichereinheit 14 zugeführt. Dazu kann ein Ventil, dass vor der Verstromungseinheit 3 angeordnet ist, verschlossen werden, um TM⁺ über den Wasserstoff-Transfermedium-Wärmetauscher 16 zu kühlen und der Speichereinheit 14 zuzuführen. Dazu kann die Wasserstoff-Transfermedium-Pumpe 15 in umgekehrter Förderrichtung betrieben werden. Zusätzlich oder alternativ kann eine weitere Pumpe eingesetzt werden. Von der Wasserstoff-Transfermedium-Speichereinheit 14 wird dem Wasserstoff-Speichermedium in der Wasserstoff-Transfereinheit 6 solange weiterhin Wasserstoff-Transfermedium zugeführt, bis das Gemisch in der Wasserstoff-Transfereinheit 6 überwiegend TM⁺ enthält. Wenn die Wasserstoff-Transfermedium-Speichereinheit 14 gefüllt ist, wird eine weitere Zufuhr von TM⁻ in die Wasserstoff-Transfereinheit 6 und die Zufuhr von LOHC⁺ in die Wasserstoff-Transfereinheit 6 gestoppt. In der Wasserstoff-Transfereinheit 6 verbleibt eine Grundmenge von Wasserstoff-Transfermedium und Wasserstoff-Speichermedium, das mit der Restwärme der Wasserstoff-Transfereinheit 6 zu TM⁺ und zu LOHC⁻ reagieren kann. Damit wird ein weiteres Reservoir an TM⁺ bereitgestellt, insbesondere zusätzlich zu der Menge an TM⁺, die in der Wasserstoff-Transfermedium-Speichereinheit 14 gespeichert vorliegt.

Um die Vorrichtung 7 zusätzlich in einen Stillstandmodus abzufahren, wird, nachdem die Wasserstoff-Transfermedium-Speichereinheit 14 gefüllt ist, die Zufuhr von TM⁻ in die Wasserstoff-Transfereinheit 6 gestoppt, aber die Zufuhr von LOHC⁺ aufrechterhalten. In der Wasserstoff-Transfereinheit 6 verbleibt somit eine Grundmenge an LOHC⁺ ohne Beimischung von Wasserstoff-Transfermedium. Damit wird in der Wasserstoff-Transfereinheit eine Grundbefüllung bereitgestellt, die einen hohen Flammpunkt aufweist, was beispielsweise Wartungsarbeiten an der Wasserstoff-Transfereinheit 6 gefahrlos ermöglicht.

Um aus dem laufenden Betrieb eine Notabschaltung zu ermöglichen, wird die Wasserstoff-Transfereinheit 6 auf Umgebungsdruck druckentlastet und alle Pumpen bis auf die Sauerstoff-Pumpe 19 stromlos geschaltet. Außerdem werden alle Ventile in den Fluidleitungen geschlossen.

Eine Notabschaltung kann beispielsweise in Folge eines Druckaufbaus in der Wasserstoff-Transfereinheit 6, bei einem Lastabwurf an der Verstromungseinheit 3 oder bei Leckagen entlang der Förderleitungen oder Kurzschlüssen an dem Elektromotor 2 erforderlich sein.

Um die Vorrichtung 7 aus einem Stillstand heraus anzufahren, wird die Wasserstoff-Transfermedium-Speichereinheit 14 mit angereichertem Wasserstoff-Transfermedium gefüllt. Die Batterie 4 ist elektrisch geladen. Der erste Wasserstoff-Speichermedium-Speicherbehälter 27 ist mit beladenem Wasserstoff-Speichermedium gefüllt. Entsprechend ist der zweite Wasserstoff-Speichermedium-Speicherbehälter 28 geleert. Alle Trenneinheiten 13, 32, 33, alle Heizungen, Pumpen sind bei Raumtemperatur, trocken und stromlos.

Um aus dem Ruhezustand, dem sogenannten Stand-by-Betrieb, anzufahren, ist die Wasserstoff-Transfermedium-Speichereinheit 14 teilweise gefüllt mit TM⁺. Die Batterie 4 ist zumindest hälftig elektrisch geladen. Die Speicherbehälter 27, 28 sind teilweise gefüllt mit Wasserstoff-Speichermedium. Wird elektrischer Strom durch den Elektromotor 2 angefordert, wird aus der Wasserstoff-Transfermedium-Speichereinheit 14 Wasserstoff-Transfermedium über die Wasserstoff-Transfermedium-Pumpe 15 und den Wasserstoff-Transfermedium-Wärmetauscher 16 Wasserstoff-Transfermedium in die Verstromungseinheit 3 gefördert. Dazu werden die Wasserstoff-Transfermedium-Wärmetauscher 16 im Anfahrvorgang als elektrische Heizung betrieben und durch die elektrische Batterie 4 mit Strom versorgt. Zeitgleich wird mittels der Sauerstoff-Pumpe 19 das sauerstoffhaltige Gasgemisch in die Verstromungseinheit 3 gefördert. Die Pumpen 15, 19 werden durch die elektrische Batterie 4 mit Strom versorgt und die Verstromungseinheit 3 durch die Stromerzeugung auf Betriebstemperatur gebracht. Bis die erforderliche Betriebstemperatur erreicht ist, bleibt die Kühlung in der Verstromungseinheit 3 abgeschaltet. Die Wasserstoff-Transfermedium-Trenneinheit 13 kann ebenfalls durch die elektrische Batterie 4 vorgeheizt und auf Betriebstemperatur gebracht werden.

Die Wasserstoff-Transfereinheit 6 wird durch eine elektrische Heizung auf eine Temperatur oberhalb des Siedepunktes aller Wasserstoff-Transfermedien-Komponenten, typischerweise auf eine Temperatur zwischen 120 °C und 220 °C gebracht. Sobald diese Temperatur erreicht ist, wird LOHC⁺ über die Wasserstoff-Speichermedium-Pumpe 30 und den Wasserstoff-Speichermedium-Wärmetauscher 29 sowie TM⁻ über den zweiten Kreislauf-Wärmetauscher 12 zugeführt.

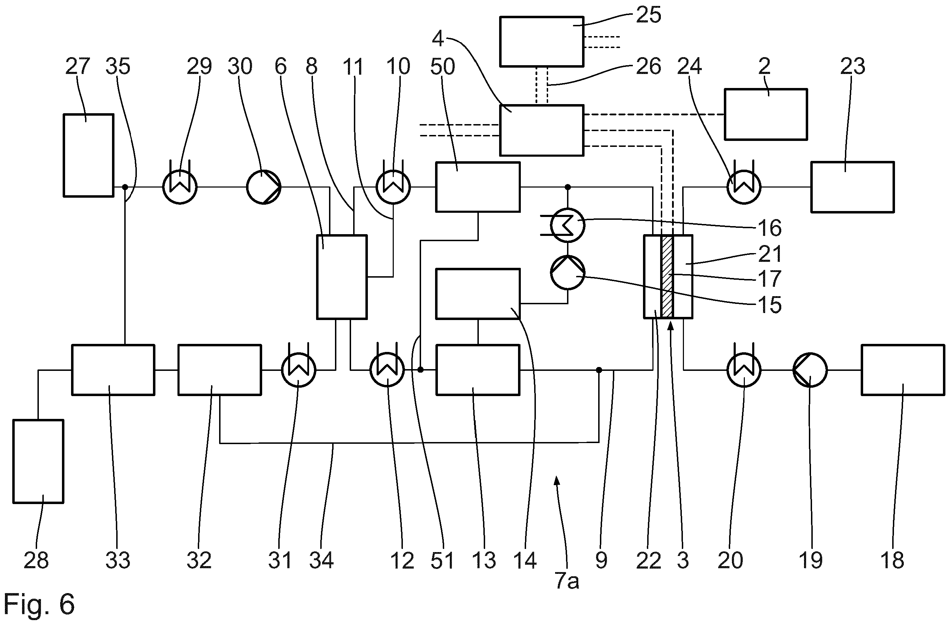

Im Folgenden wird unter Bezugnahme auf die Fig. 6 ein zweites Ausführungsbeispiel der Erfindung beschrieben. Konstruktiv identische Teile erhalten dieselbe Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass die Vorrichtung 7a eine Wasserstoff-Transfermedium/Wasserstoff-Trenneinheit 50 aufweist, die entlang der ersten Kreislaufleitung 8 stromabwärts dem ersten Kreislauf-Wärmetauscher 10 angeordnet ist. Die Wasserstoff-Transfermedium/Wasserstoff-Trenneinheit 50 ermöglicht es, aus dem Fluidstrom TM⁻ von TM⁺ und/oder Wasserstoffgas, der möglicherweise entstanden sein kann, abzutrennen.

Das Gemisch aus Wasserstoffgas und TM⁺ wird unmittelbar der Verstromungseinheit 3 über die erste Kreislaufleitung 8 zugeführt. Das abgetrennte TM⁻ wird über eine Wasserstoff-Transfermedium-Rückführleitung 51 der zweiten Kreislaufleitung 9 zugeführt. Die Wasserstoff-Transfermedium-Rückführleitung 51 mündet in die zweite Kreislaufleitung an einer Stelle zwischen der Wasserstoff-Transfermedium-Trenneinheit 13 und dem zweiten Kreislauf-Wärmetauscher 12.

Anstelle der Luft, die die mäanderförmigen Leitungsabschnitte des Kondensators 43 umströmt, kann zusätzlich oder alternativ auch 2-Propanol verwendet werden, das von der Wasserstoff-Transfermedium-Trenneinheit 13 zu der Wasserstoff-Transfereinheit 6 gefördert werden soll. Dies ist insbesondere dann vorteilhaft, wenn die Wasserstoff-Transfermedium/Wasserstoff-Trenneinheit 50 entlang der ersten Kreislaufleitung 8 vorgesehen ist. Bei dieser Trenneinheit 50 besteht das Kondensat größtenteils aus 2-Propanol, das dann der Verstromungseinheit 3 zugeführt werden kann. Gasförmiges Aceton kann an der Unterseite 40 der Wasserstoff-Transfereinheit 6 wieder eingeleitet werden.

Die Niedertemperatur-Polymer-Elektrolyt-Membran-Brennstoffzelle gemäß den beiden ersten Ausführungsbeispielen weist verschiedene Möglichkeiten der Wärmeintegration auf. Beispielsweise kann Abwärme aus dem Wasser-Wärmetauscher 24 einem der Wärmetauscher 29, 20, 16 und/oder 12 zugeführt werden. Zusätzlich oder alternativ ist es möglich, die Trenneinheiten 13, 32, 33 und/oder 50 mit Abwärme aus dem Wasser-Wärmetauscher 24 zu versorgen. Die Wärme aus dem Wasser-Wärmetauscher 24 wird in einem Temperaturbereich von 80 °C bis 90 °C bereitgestellt. Wird die Brennstoffzelle 3 aktiv gekühlt, kann auch dieser Wärmestrom entsprechend genutzt werden.

Die Abwärme aus dem ersten Kreislauf-Wärmetauscher 10 liegt in einem Temperaturbereich von 120 °C bis 220 °C vor und kann ebenfalls in den Wärmetauschern 12, 16, 20 und 29 und/oder zum Beheizen der Trenneinheiten 13, 32, 33 und/oder 50 genutzt werden. Dies gilt gleichermaßen für Abwärme aus dem zweiten Wasserstoff-Speichermedium-Wärmetauscher 31, der Abwärme in einem Temperaturbereich von 120 °C bis 220 °C bereitstellt.

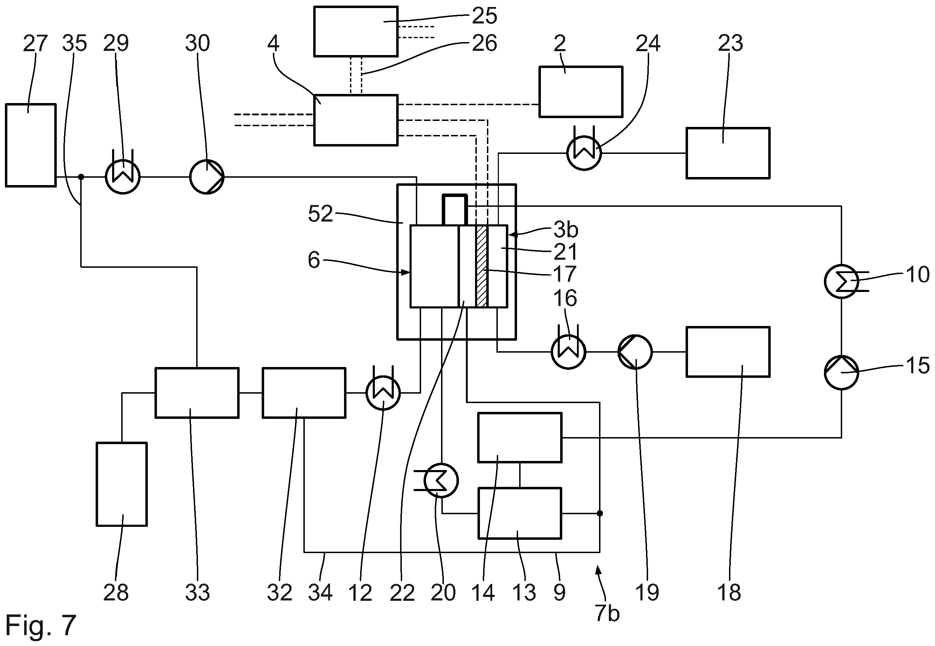

Im Folgenden wird unter Bezugnahme auf Fig. 7 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit hingewiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht darin, dass die Verstromungseinheit 3b als Hochtemperatur-Polymer-Elektrolyt-Membran-Brennstoffzelle ausgeführt ist. Die typischen Reaktionstemperaturen der Brennstoffzelle 3b liegen in einem Temperaturbereich zwischen 140 °C und 200 °C.

Die Verstromungseinheit 3b ist unmittelbar mit der Wasserstoff-Transfereinheit 6 gekoppelt und in einem gemeinsamen Vorrichtungsgehäuse 52 angeordnet.

Das Vorrichtungsgehäuse 52 ist insbesondere thermisch isoliert und kann eine zusätzliche elektrische Heizung aufweisen, die ein Aufheizen des Vorrichtungsgehäuses 52 auf einen Temperaturbereich von 140 °C bis 200 °C ermöglicht und es insbesondere gewährleistet, das Vorrichtungsgehäuse 52 auf diesem Temperaturniveau zu halten. Das Vorrichtungsgehäuse kann weiterhin mit einer aktiven Kühlung versehen sein, so dass die Temperatur des Vorrichtungsgehäuses in allen Betriebszuständen in einem für die Effizienz der Anordnung optimalen Bereich gehalten werden kann.

Die Vorrichtung 7b weist die Wasserstoff-Speichermedium-Trenneinheit 33 auf. Die Wasserstoff-Speichermedium-Trenneinheit 33 kann auch entfallen. Zusätzlich oder alternativ kann die Wasserstoff-Transfermedium/Wasserstoff-Trenneinheit 50 vorgesehen sein, die in dem Ausführungsbeispiel gemäß Fig. 7 aus Darstellungsgründen nicht gezeigt ist.

Nachfolgend wird der Betrieb der Vorrichtung 7b näher erläutert. Der Betrieb, insbesondere die verschiedenen Betriebsweisen, unterscheiden sich grundsätzlich nicht von dem Betrieb der Vorrichtung 7 gemäß dem ersten Ausführungsbeispiel.

Dadurch, dass das Vorrichtungsgehäuse 52 thermisch isoliert ist und sowohl die Verstromungseinheit 3b als auch die Wasserstoff-Transfereinheit 6 aufweist, ist der thermische Austausch zwischen diesen Einheiten verbessert. Die Wärmeübertragung zwischen der Verstromungseinheit 3b und der Wasserstoff-Transfereinheit 6 erfolgt insbesondere unmittelbar. Beide Einheiten 3b befinden sich auf der gleichen oder einer sehr ähnlichen Temperatur. Der maximale Temperaturunterschied zwischen der Verstromungseinheit 3b und der Wasserstoff-Transfereinheit 6 beträgt maximal 100 K, insbesondere maximal 70 K, insbesondere maximal 50 K, insbesondere maximal 30 K, insbesondere maximal 20 K, insbesondere maximal 10 K und insbesondere maximal 5 K.

Wärmeübertragungsverluste sind reduziert und insbesondere vermieden. Insbesondere ist es dadurch möglich, den Zuheizaufwand für die Verstromungseinheit 3b und die Wasserstoff-Transfereinheit 6 zu reduzieren, da beide Komponenten 3b, 6 innerhalb des thermisch isolierten Vorrichtungsgehäuses 52 angeordnet sind. Es ist aber auch möglich, das Vorrichtungsgehäuse 52 zu kühlen, um unerwünschte Wärmeüberschüsse abzuführen.

## Patentansprüche

1. Vorrichtung zum Erzeugen von elektrischem Strom umfassend
a. eine Wasserstoff-Transfereinheit (6) zum Transferieren von Wasserstoff von einem Wasserstoff-Speichermedium auf ein Wasserstoff-Transfermedium, wobei das Wasserstoff-Speichermedium eine flüssige organische Kohlenwasserstoffverbindung (LOHC) ist,
b. eine Verstromungseinheit (3) zum Erzeugen von elektrischem Strom aus dem Wasserstoff-Transfermedium.

2. Vorrichtung gemäß Anspruch 1, **gekennzeichnet durch** eine Wasserstoff-Speichermedium-Speichereinheit (53) zum Speichern des Wasserstoff-Speichermediums in zumindest teilweise beladenem Zustand LOHC⁺ und/oder in zumindest teilweise unbeladenem Zustand LOHC⁻, wobei LOHC⁺ und LOHC⁻ bevorzugt jeweils in einer separaten Speicherkammer (55, 56) vermischungsfrei gespeichert sind.

3. Vorrichtung gemäß einem der vorstehenden Ansprüche, **gekennzeichnet durch** eine Wasserstoff-Transfermedium-Speichereinheit (14) zum Speichern des Wasserstoff-Transfermediums.

4. Vorrichtung gemäß einem der vorstehenden Ansprüche, **dadurch gekennzeichnet, dass** die Verstromungseinheit (3) eine Brennstoffzelle, insbesondere eine Direkt-Brennstoffzelle, zum Verstromen des Wasserstoff-Transfermediums ist.

5. Vorrichtung gemäß Anspruch 4, **dadurch gekennzeichnet, dass** die Brennstoffzelle eine Membran, insbesondere eine protonenleitende Membran, aufweist.

6. Vorrichtung gemäß einem der vorstehenden Ansprüche, **gekennzeichnet durch** eine mit der Verstromungseinheit (3) verbundene elektrische Batterie (4), die insbesondere unmittelbar mit der Verstromungseinheit (3) verbunden ist.

7. Vorrichtung gemäß einem der vorstehenden Ansprüche, **gekennzeichnet durch** einen elektrischen Verbraucher (2), insbesondere einen Elektromotor, der insbesondere an der Batterie (4) angeschlossen ist.

8. Vorrichtung gemäß einem der vorstehenden Ansprüche, **gekennzeichnet durch** eine Wasserstoff-Speichermedium/Wasserstoff-Transfermedium-Trenneinheit (32) zum Trennen des Wasserstoff-Speichermediums von dem Wasserstoff-Transfermedium.

9. Vorrichtung gemäß einem der vorstehenden Ansprüche, **gekennzeichnet durch** eine Wasserstoff-Transfermedium-Trenneinheit (13) zum Trennen von zumindest teilweise beladenem Wasserstoff-Transfermedium von zumindest teilweise unbeladenem Wasserstoff-Transfermedium, wobei die Wasserstoff-Transfermedium-Trenneinheit (32) stromabwärts zu der Verstromungseinheit (3) angeordnet ist.

10. Vorrichtung gemäß einem der vorstehenden Ansprüche, **gekennzeichnet durch** eine Wasserstoff-Speichermedium-Trenneinheit (33) zum Trennen von zumindest teilweise beladenem Wasserstoff-Speichermedium von zumindest teilweise unbeladenem Wasserstoff-Speichermedium, wobei die Wasserstoff-Speichermedium-Trenneinheit (33) stromabwärts zu der Wasserstoff-Speichermedium/Wasserstoff-Transfermedium-Trenneinheit (32) angeordnet ist.

11. Vorrichtung gemäß einem der vorstehenden Ansprüche, **gekennzeichnet durch** eine Regelungseinheit (25) zum geregelten Betreiben der Vorrichtung (7), wobei die Regelungseinheit (25) insbesondere mit den Einheiten (2, 3, 4, 6, 10, 12, 13, 14, 15, 16, 19, 20, 24, 29, 30, 31, 32, 33 und 50) in bidirektionaler Signalverbindung steht.

12. Mobile Einrichtung, insbesondere elektrisch angetriebenes Fahrzeug, mit einer Vorrichtung gemäß einem der vorstehenden Ansprüche.

13. Verfahren zum Erzeugen von elektrischem Strom umfassend die Verfahrensschritte
- Transferieren von Wasserstoff von einem Wasserstoff-Speichermedium auf ein Wasserstoff-Transfermedium mittels einer Wasserstoff-Transfereinheit (6), wobei das Wasserstoff-Speichermedium eine flüssige organische Kohlenwasserstoffverbindung (LOHC) ist,
- Erzeugen von elektrischem Strom aus dem Wasserstoff-Transfermedium mittels einer Verstromungseinheit (3).

14. Verfahren gemäß Anspruch 13, **dadurch gekennzeichnet, dass** das Wasserstoff-Speichermedium eine Flüssigkeit, insbesondere ein flüssiges Gemisch mehrerer organischer Verbindungen, aufweist.

15. Verfahren gemäß Anspruch 13 oder 14, **dadurch gekennzeichnet, dass** das Wasserstoff-Transfermedium in dem zumindest teilweise
unbeladenem Zustand eine Kohlenstoff-Sauerstoff-Doppelbindung von dem Typ 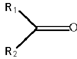 aufweist, wobei R₁ und R₂ gleich oder unterschiedlich sind und je ein Alkylrest, Cycloalkylrest oder Arylrest mit 1-8 Kohlenstoff-Atomen darstellen oder R₁ und R₂ ringförmig verbunden sind und R₁ und R₂ neben den Kohlenstoffatomen eine oder mehrere zusätzliche Kohlenstoff-Sauerstoff-Doppelbindungen aufweisen.

## Claims

1. An apparatus for generating electric power, comprising
a. a hydrogen transfer unit (6) for transferring hydrogen from a hydrogen storage medium to a hydrogen transfer medium, wherein the hydrogen transfer medium is a liquid organic hydrocarbon compound (LOHC),
b. a power generation unit (3) for generating electric power from the hydrogen transfer medium.

2. The apparatus as claimed in claim 1, **characterized by** a hydrogen storage medium storage unit (53) for storing the hydrogen storage medium in at least partially loaded state LOHC⁺ and/or in at least partially unloaded state LOHC⁻, with LOHC⁺ and LOHC⁻ preferably each being stored in a separate storage chamber (55, 56) without mixing.

3. The apparatus as claimed in either of the preceding claims, **characterized by** a hydrogen transfer medium storage unit (14) for storing the hydrogen transfer medium.

4. The apparatus as claimed in any of the preceding claims, **characterized in that** the power generation unit (3) is a fuel cell, in particular a direct fuel cell, for converting the hydrogen transfer medium into electric power.

5. The apparatus as claimed in claim 4, **characterized in that** the fuel cell has a membrane, in particular a proton-conducting membrane.

6. The apparatus as claimed in any of the preceding claims, **characterized by** an electric battery (4) which is connected to the power generation unit (3) and is in particular connected directly to the power generation unit (3).

7. The apparatus as claimed in any of the preceding claims, **characterized by** an electric load (2), in particular an electric motor, which is, in particular, connected to the battery (4).

8. The apparatus as claimed in any of the preceding claims, **characterized by** a hydrogen storage medium/hydrogen transfer medium separation unit (32) for separating the hydrogen storage medium from the hydrogen transfer medium.

9. The apparatus as claimed in any of the preceding claims, **characterized by** a hydrogen transfer medium separation unit (13) for separating at least partially loaded hydrogen transfer medium from at least partially unloaded hydrogen transfer medium, with the hydrogen transfer medium separation unit (32) being arranged downstream of the power generation unit (3).

10. The apparatus as claimed in any of the preceding claims, **characterized by** a hydrogen storage medium separation unit (33) for separating at least partially loaded hydrogen storage medium from at least partially unloaded hydrogen storage medium, with the hydrogen storage medium separation unit (33) being arranged downstream of the hydrogen storage medium/hydrogen transfer medium separation unit (32).

11. The apparatus as claimed in any of the preceding claims, **characterized by** a regulating unit (25) for regulated operation of the apparatus (7), with the regulating unit (25) being, in particular, in bidirectional signal communication with the units (2, 3, 4, 6, 10, 12, 13, 14, 15, 16, 19, 20, 24, 29, 30, 31, 32, 33 and 50).

12. A mobile device, in particular electrically powered vehicle, comprising an apparatus as claimed in any of the preceding claims.

13. A process for generating electric power, comprising the process steps
- transfer of hydrogen from a hydrogen storage medium to a hydrogen transfer medium by means of a hydrogen transfer unit (6), wherein the hydrogen transfer medium is a liquid organic hydrocarbon compound (LOHC),
- generation of electric power from the hydrogen transfer medium by means of a power generation unit (3).

14. The process as claimed in claim 13, **characterized in that** the hydrogen storage medium comprises a liquid, in particular a liquid mixture of a plurality of organic compounds.

15. The process as claimed in claim 13 or 14, **characterized in that** the hydrogen transfer medium in the at least partially unloaded state has a carbon-oxygen double bond of the type 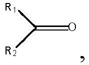 where R₁ and R₂ are identical or different and are each an alkyl radical, cycloalkyl radical or aryl radical having 1-8 carbon atoms or R₁ and R₂ are joined to form a ring and R₁ and R₂ have one or more additional carbon-oxygen double bonds in addition to the carbon atoms.

## Revendications

1. Dispositif de production de courant électrique comprenant
a. une unité de transfert d'hydrogène (6) pour le transfert d'hydrogène d'un milieu d'accumulation d'hydrogène à un milieu de transfert d'hydrogène, dans lequel le milieu d'accumulation d'hydrogène est un composé hydrocarboné organique liquide (LOHC),
b. une unité de conversion en électricité (3) pour la production de courant électrique à partir du milieu de transfert d'hydrogène.

2. Dispositif selon la revendication 1, **caractérisé par** une unité d'accumulation de milieu d'accumulation d'hydrogène (53) pour l'accumulation du milieu d'accumulation d'hydrogène dans un état au moins partiellement chargé LOHC⁺ et/ou dans un état au moins partiellement non chargé LOHC⁻, dans lequel LOHC⁺ et LOHC⁻ sont accumulés sans mélange de préférence respectivement dans une chambre d'accumulation séparée (55, 56).

3. Dispositif selon l'une des revendications précédentes, **caractérisé par** une unité d'accumulation de milieu de transfert d'hydrogène (14) pour l'accumulation du milieu de transfert d'hydrogène.

4. Dispositif selon l'une des revendications précédentes, **caractérisé en ce que** l'unité de conversion en électricité (3) est une pile à combustible, en particulier une pile à combustible directe, pour la conversion en électricité du milieu de transfert d'hydrogène.

5. Dispositif selon la revendication 4, **caractérisé en ce que** la pile à combustible présente une membrane, en particulier une membrane conductrice de protons.

6. Dispositif selon l'une des revendications précédentes, **caractérisé par** une batterie (4) électrique reliée à l'unité de conversion en électricité (3) qui est reliée en particulier directement à l'unité de conversion en électricité (3).

7. Dispositif selon l'une des revendications précédentes, **caractérisé par** un consommateur électrique (2), en particulier un moteur électrique qui est raccordé en particulier à la batterie (4).

8. Dispositif selon l'une des revendications précédentes, **caractérisé par** une unité de séparation de milieu de transfert d'hydrogène/milieu d'accumulation d'hydrogène (32) pour la séparation du milieu d'accumulation d'hydrogène du milieu de transfert d'hydrogène.

9. Dispositif selon l'une des revendications précédentes, **caractérisé par** une unité de séparation de milieu de transfert d'hydrogène (13) pour la séparation du milieu de transfert d'hydrogène au moins partiellement chargé du milieu de transfert d'hydrogène au moins partiellement non chargé, dans lequel l'unité de séparation de milieu de transfert d'hydrogène (32) est agencée en aval de l'unité de conversion en électricité (3).

10. Dispositif selon l'une des revendications précédentes, **caractérisé par** une unité de séparation de milieu d'accumulation d'hydrogène (33) pour la séparation du milieu d'accumulation d'hydrogène au moins partiellement chargé du milieu d'accumulation d'hydrogène au moins partiellement non chargé, dans lequel l'unité de séparation du milieu d'accumulation d'hydrogène (33) est agencée en aval de l'unité de séparation du milieu de transfert d'hydrogène/milieu d'accumulation d'hydrogène.

11. Dispositif selon l'une des revendications précédentes, **caractérisé par** une unité de régulation (25) pour le fonctionnement régulé du dispositif (7), dans lequel l'unité de régulation (25) est en liaison de signal bidirectionnelle en particulier avec les unités (2, 3, 4, 6, 10, 12, 13, 14, 15, 16, 19, 20, 24, 29, 30, 31, 32, 33 et 50).

12. Dispositif mobile, en particulier véhicule entraîné électriquement, avec un dispositif selon l'une des revendications précédentes.

13. Procédé de production de courant électrique comprenant les étapes de procédé
- de transfert d'hydrogène d'un milieu d'accumulation d'hydrogène à un milieu de transfert d'hydrogène au moyen d'une unité de transfert d'hydrogène (6), dans lequel le milieu d'accumulation d'hydrogène est un composé hydrocarboné organique liquide (LOHC),
- de production de courant électrique à partir du milieu de transfert d'hydrogène au moyen d'une unité de conversion en électricité (3).

14. Procédé selon la revendication 13, **caractérisé en ce que** le milieu d'accumulation d'hydrogène présente un liquide, en particulier un mélange liquide de plusieurs composés organiques.

15. Dispositif selon la revendication 13 ou 14, **caractérisé en ce que** le milieu de transfert d'hydrogène présente dans l'état au moins partiellement non chargé une double liaison d'oxygène et de carbone du type 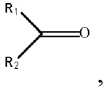 dans lequel R₁ et R₂ sont identiques ou différents et représentent chacun un radical alkyle, un radical cycloalkyle ou un radical aryle avec 1 à 8 atomes de carbone ou R₁ et R₂ sont reliés en annulaire et R₁ et R₂ présentent outre les atomes de carbone une ou plusieurs doubles liaisons d'oxygène et de carbone supplémentaires.
